(19) **Europäisches Patentamt / European Patent Office / Office européen des brevets**

(11) **EP 4 194 921 A1**

(12) # EUROPEAN PATENT APPLICATION

(43) Date of publication:
**14.06.2023 Bulletin 2023/24**

(21) Application number: **22160503.3**

(22) Date of filing: **07.03.2022**

(51) International Patent Classification (IPC):
**G02B 15/14** (2006.01)

(52) Cooperative Patent Classification (CPC):
**G02B 15/143503**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2021 CN 202111517776**

(71) Applicant: **Jiangxi Jingchao Optical Co., Ltd.**
**Nanchang, Jiangxi 330096 (CN)**

(72) Inventors:
• **HUA, Lu**
**Nanchang, 330096 (CN)**

• **LI, Ming**
**Nanchang, 330096 (CN)**
• **YANG, Jian**
**Nanchang, 330096 (CN)**

(74) Representative: **Ramrath, Lukas**
**Patentanwälte Bressel und Partner mbB**
**Potsdamer Platz 10**
**10785 Berlin (DE)**

Remarks:
Amended claims in accordance with Rule 137(2) EPC.

(54) **OPTICAL SYSTEM, LENS MODULE, AND ELECTRONIC DEVICE**

(57) An optical system, a lens module, and an electronic device are provided. The optical system includes sequentially from an object side to an image side along an optical axis: a first lens, a third lens, and a fifth lens each with a positive refractive power, a second lens and a fourth lens each with a negative refractive power, and a sixth lens and a seventh lens each with a refractive power. Object-side surfaces and image-side surfaces of the first lens and the fifth to seventh lenses are aspheric surfaces. The object-side surfaces of the first lens and the fifth lens are convex near the optical axis. The object-side surface and the image-side surface of the second lens are concave. The object-side surface and the image-side surface of the third lens are convex. The object-side surface of the sixth lens is concave near the optical axis. The image-side surface of the seventh lens is concave near the optical axis. The object-side surface and the image-side surface of the seventh lens each have at least one inflection point. By satisfying the above condition, the optical system of the present disclosure has characteristics of large zoom range, good distortion correction, and high resolution.

FIG. 1a

EP 4 194 921 A1

**Description**

This disclosure relates to the technical field of optical imaging, and in particular to an optical system, a lens module, and an electronic device.

With the rapid development of science and technology, various electronic devices equipped with camera lenses, such as mobile phones, notebooks, computers, automobiles, drones, and smart home devices, have become more and more widely used. In order for a traditional optical system with a zoom function to have a sufficient zooming effect and clear imaging at far and near ends so as to meet various shooting requirements of users, the traditional zoom system generally has a large number of lenses, which makes the lens structure extremely complicated. Therefore, to correct distortion well and improve resolution of the optical system on the basis of a large zoom range has become a focus of attention in the current field.

The present disclosure aims to provide an optical system which has characteristics of large zoom range, good distortion correction, and high resolution.

To this end, the present disclosure provides the following solutions.

In a first aspect, an optical system is provided in the present disclosure. The optical system includes sequentially from an object side to an image side along an optical axis: a first lens with a positive refractive power, a second lens with a negative refractive power, a third lens with a positive refractive power, a fourth lens with a negative refractive power, a fifth lens with a positive refractive power, a sixth lens with a refractive power, and a seventh lens with a refractive power. The first lens has an object-side surface which is convex near the optical axis. The second lens has an object-side surface which is concave near the optical axis and an image-side surface which is concave near the optical axis. The third lens has an object-side surface which is convex near the optical axis and an image-side surface which is convex near the optical axis. The fourth lens has an object-side surface which is concave near the optical axis. The fifth lens has an object-side surface which is convex near the optical axis. The sixth lens has an object-side surface which is concave near the optical axis. The seventh lens has an image-side surface which is concave near the optical axis. Each of the object-side surface and the image surface of the seventh lens has at least one inflection point. The optical system satisfies an expression: $-2<fcj/F67<-1.4$, where $fcj$ represents an effective focal length of the optical system at the long focal length end, and F67 represents a combined focal length of the sixth lens and the seventh lens.

The first lens and the second lens are fixed relative to one another and constitute a first lens group. The first lens group is fixed. The third to fifth lenses are fixed relative to one another and constitute a second lens group. The sixth lens and the seventh lens are fixed relative to one another and constitute a third lens group. The second lens group and the third lens group are movable along the optical axis to switch among a long focal length end, a medium focal length end, and a short focal length end in sequence.

The first lens and the fifth to seventh lenses are aspheric lenses. The second to fourth lenses are spheric lenses. The first lens has the positive refractive power, which enables a higher luminous flux for the optical system and reduces a possibility of occurrence of vignetting in the imaging surface. The object-side surface of the first lens is convex near the optical axis, resulting in a larger angle of view of the optical system. The object-side surface and the image-side surface of the second lens are concave near the optical axis, which can improve the negative refractive power of the second lens and is conductive to reduce a deflection angle of edge field of view, so that the light may transition more smoothly to the second lens group and distortion generated by the front lens group can be well corrected. The fifth lens has the positive refractive power, which can balance well on-axis aberration of the optical system, thus improving resolution of the optical system. The third lens group has a reasonable distribution of refractive powers, which can effectively reduce aberration. In addition, a surface profile of the image-side surface of the seventh lens may be adjusted as needed, so that an incident angle of light incident into the imaging surface can be adjusted as needed, which can ensure relative illuminance at the edge of the imaging surface and is beneficial for the optical system of the present disclosure to be equipped with a photosensitive element with higher resolution, thus further improving imaging quality. By making the optical system satisfy the above expression, the negative refractive power of the third lens group can be reasonably exploited, which is beneficial to increase an effective focal length at the long focal length end, so that the optical system can obtain a large zoom ratio.

In an implementation, the third lens is cemented with the fourth lens. The optical system satisfies an expression: $-1.6<r32/f345<-0.9$ or $1<f5/r51<2$, where $r32$ represents a radius of curvature of the image-side surface of the third lens at the optical axis, $f345$ represents a combined effective focal length of the third to fifth lenses, $f5$ represents an effective focal length of the fifth lens, and $r51$ represents a radius of curvature of the object-side surface of the fifth lens at the optical axis. The third lens is engaged with the fourth lens by cement, which is beneficial to correct aberration of the first lens group and beneficial for the optical system to obtain a larger focal length at the long focal length end, thereby increasing a zoom range. By making the optical system satisfy the expression $1<f5/r51<2$, the focal length of the fifth lens and curvature of the object-side surface near the optical axis can be reasonably configured, which is beneficial to ensure manufacturability of the fifth lens, shorten a system total length, correct aberration generated by the front lens, and ensure that edge light can smoothly transition to the third lens group, so as to obtain higher relative brightness, thus improving imaging quality. By making the optical system satisfy the expression -1,6<$r32/f345$<-0.9, the ratio can be controlled within a reasonable range, which is beneficial for the third lens to be cemented with the fourth lens, and the cemented lens can have a cemented surface with reasonable curvature, which can ensure manufacturability of the cemented lens, so that the second lens group can provide enough positive refractive power for the optical system. In addition, aberration generated by the front and rear lenses can be effectively corrected so that overall aberration balance can be achieved, improving system resolution.

In an implementation, the optical system satisfies an expression: 2.01>$fcj/fdj$>1.7, where $fcj$ represents an effective focal length of the optical system at the long focal length end, $fdj$ represents an effective focal length of the optical system at the short focal length end. On the premise of balancing performance and technological feasibility, the optical system can obtain a large zoom ratio, so that an electronic device equipped with the lens module can have a large zoom range.

In an implementation, the optical system satisfies an expression: -1.6<$f4/f3$<-1.2, where $f3$ represents an effective focal length of the third lens and $f4$ represents an effective focal length of the fourth lens. By making the optical system satisfy the above expression, when the third lens and the fourth lens constitute the cemented lens, the cemented lens can provide a reasonable refractive power for the second lens group. By reasonably distributing the positive refractive power of the third lens and the negative refractive power of the fourth lens, the manufacturability of the third lens and the fourth lens can be ensured, so that assembly stability of the lenses can be improved and the optical system can obtain good imaging quality.

In an implementation, the optical system satisfies an expression: -4<$r61/r72$<-1.2, where $r72$ represents a radius of curvature of the image-side surface of the seventh lens at the optical axis and $r61$ represents a radius of curvature of the object-side surface of the sixth lens at the optical axis. By making the optical system satisfy the above expression, a surface profile of a lens surface of the third lens group near the object side and a surface profile of a lens surface of the third lens group near the image side can be reasonably constrained, which is beneficial to obtain a reasonable deflection angle for light of edge field of view, and is conductive to correct aberration of the optical system and improve imaging quality. In addition, manufacturability of the sixth lens and the seventh lens can be ensured. If $r67/r72$ exceeds the upper limit in the expression, the surface profile of the image-side surface of the seventh lens are too flat, which is unfavorable for aberration correction. If $r61/r72$ is less than the lower limit in the expression, the surface profile of the image-side surface of the seventh lens has severe curvature, which significantly increases processing difficulty of the lens.

In an implementation, the optical system satisfies an expression: 4<$d3dj/d1cj$<10, where $d3dj$ represents a distance on the optical axis from the image-side surface of the seventh lens to an object-side surface of an infrared cut-off filter when the optical system is at the short focal length end, and $d1cj$ represents a distance on the optical axis from the image-side surface of the second lens to the object-side surface of the third lens when the optical system is at the long focal length end. By making the optical system satisfy the above expression, on the one hand, the optical system can have an improved zoom ratio, so that a variation range of magnification can be expanded. On the other hand, a safe and reasonable distance can be maintained among the respective lens groups during zooming, so that stability of magnification switching during shooting can be improved.

In an implementation, the optical system satisfies an expression: $fdj/EPDdj$<2.9, where $fdj$ represents an effective focal length of the optical system at the short focal length end, and $EPDdj$ represents an entrance pupil diameter of the optical system at the short focal length end. By making the optical system satisfy the above expression, the ratio can be controlled within a reasonable range, which is beneficial to shorten the system total length and achieve miniaturization of the optical system. In addition, an aperture of the optical system can be enlarged, so that the optical system can obtain enough luminous flux even in a dark environment, thus improving imaging quality.

In an implementation, the optical system satisfies an expression: $sd11dj/$tan$(Hfovdj)$<12, where $sd11dj$ represents half of a maximum clear aperture of the object-side surface of the first lens when the optical system is at the short focal length end, and $Hfovdj$ represents half of an angle of view when the optical system is at the short focal length end. By making the optical system satisfy the above expression, a size of the lens can be reduced, so that the electronic device equipped with the optical system can have more space. In addition, a relatively large angle of view can be ensured at the short focal length end, so that the optical system can capture a wider range of scene when shooting. When $sd11dj/$tan$(Hfovdj)$ is greater than the upper limit in the expression, the half of a maximum clear aperture of the object-side surface of the first lens is too large, which is unfavorable for miniaturization of the optical system.

In an implementation, the optical system satisfies an expression: 4<$TTL/ctg3$<7 or 5.4<$TTL/ImgH$<5.7, where $TTL$ represents a distance on the optical axis from the object-side surface of the first lens to an imaging surface of the optical system, $ctg3$ represents a distance on the optical axis from the object-side surface of the sixth lens to the image-side surface of the seventh lens, and $ImgH$ represents half of an image height corresponding to a maximum angle of view of the optical system. By making the optical system satisfy the expression 4<$TTL/ctg3$<7, the ratio is controlled within a reasonable range, which facilitates to shorten the system total length. By reasonably configuring the proportion of the total length of the third lens group, the third lens group can cooperate with other lens groups, thereby improving the stability of the optical system. When the ratio is less than the lower limit in the expression, the total length of the third lens group is too large, which is not conducive to shorten the system total length. When the ratio is higher than the upper limit in the expression, the total length of the third lens group is too small, and a difference between proportions of total lengths of the third lens and other lens groups is too large, leading to reduced stability of the optical system. By making the optical system satisfy the expression 5.4<*TTL*/*ImgH*<5.7, a total size of the optical lenses can be effectively reduced, and sensitivity of the system can be reduced. In addition, the optical system can obtain a larger focal length at the long focal length end and a zoom ratio can be improved. Moreover, the optical system can be configured with a photosensitive element with higher resolution, so that a photographed image can be clearer and more details of an object photographed can be presented.

In a second aspect, a lens module is provided in the present disclosure. The lens module includes a lens barrel, a photosensitive element, and the optical system of any implementation of the first aspect. The first to seventh lenses of the optical system are installed inside the lens barrel, and the photosensitive element is disposed at the image side of the optical system.

In a third aspect, an electronic device is provided in the present disclosure. The electronic device includes a housing and the lens module of any implementation of the second aspect. The lens module is received in the housing.

In order to more clearly describe technical solutions in implementations of the disclosure or the prior art, the following will briefly introduce the drawings that need to be used in the description of the implementations or the prior art. Obviously, the drawings in the following description are only some implementations of the disclosure. For those of ordinary skill in the art, other drawings can be obtained based on these drawings without creative work.

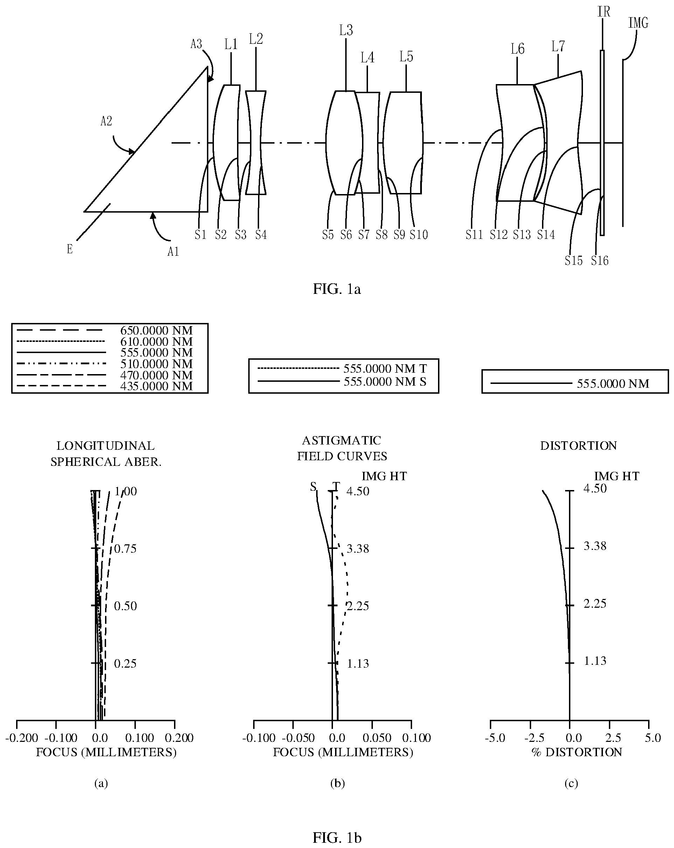

FIG. 1a is a schematic structural diagram illustrating an optical system of a first implementation at a short focal length end.

FIG. 1b illustrates a longitudinal spherical aberration curve, an astigmatic field curve, and a distortion curve of FIG. 1a.

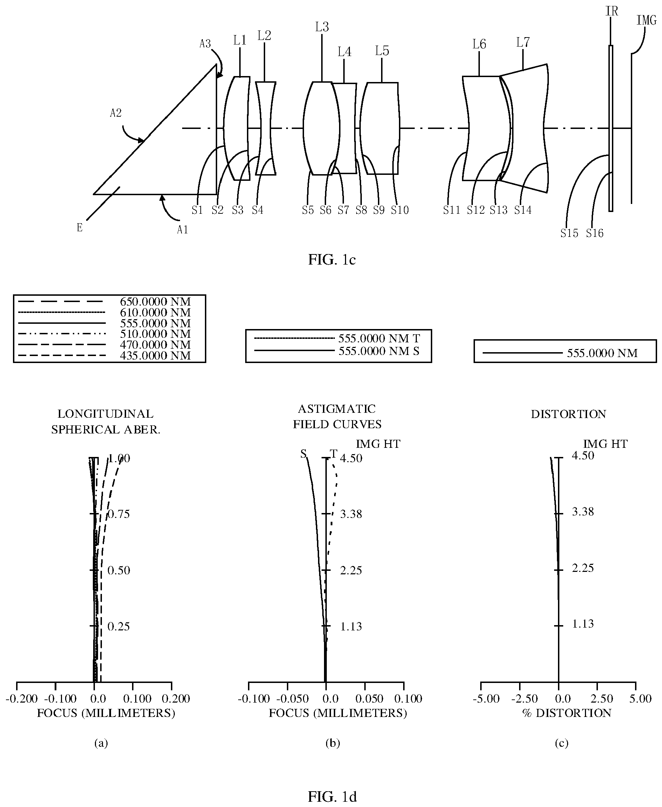

FIG. 1c is a schematic structural diagram illustrating the optical system of the first implementation at a medium focal length end.

FIG. 1d illustrates a longitudinal spherical aberration curve, an astigmatic field curve, and a distortion curve of FIG. 1c.

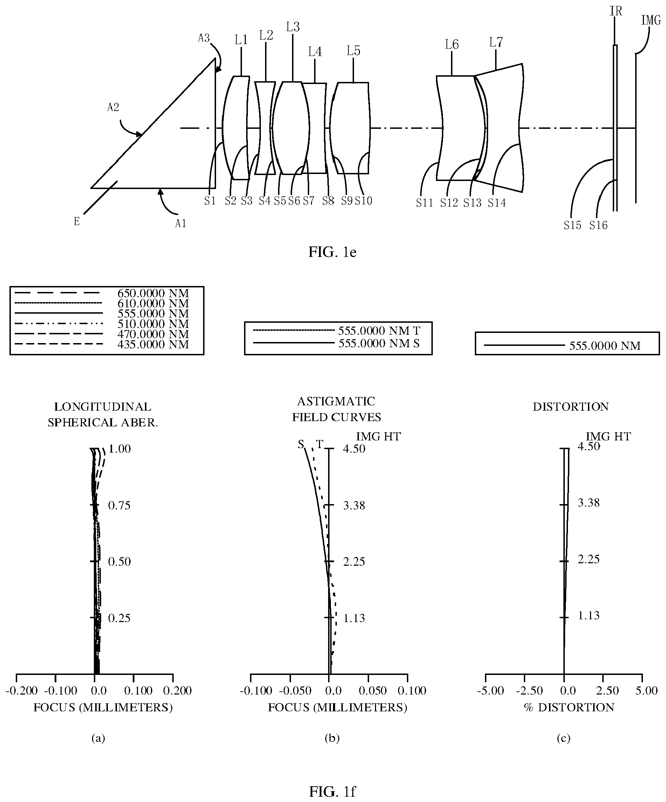

FIG. 1e is a schematic structural diagram illustrating the optical system of the first implementation at a long focal length end.

FIG. If illustrates a longitudinal spherical aberration curve, an astigmatic field curve, and a distortion curve of FIG. 1e.

FIG. 2a is a schematic structural diagram illustrating an optical system of a second implementation at a short focal length end.

FIG. 2b illustrates a longitudinal spherical aberration curve, an astigmatic field curve, and a distortion curve of FIG. 2a.

FIG. 2c is a schematic structural diagram illustrating the optical system of the second implementation at a medium focal length end.

FIG. 2d illustrates a longitudinal spherical aberration curve, an astigmatic field curve, and a distortion curve of FIG. 2c.

FIG. 2e is a schematic structural diagram illustrating the optical system of the second implementation at a long focal length end.

FIG. 2f illustrates a longitudinal spherical aberration curve, an astigmatic field curve, and a distortion curve of FIG. 2e.

FIG. 3a is a schematic structural diagram illustrating an optical system of a third implementation at a short focal length end.

FIG. 3b illustrates a longitudinal spherical aberration curve, an astigmatic field curve, and a distortion curve of FIG. 3a.

FIG. 3c is a schematic structural diagram illustrating the optical system of the third implementation at a medium focal length end.

FIG. 3d illustrates a longitudinal spherical aberration curve, an astigmatic field curve, and a distortion curve of FIG. 3c.

FIG. 3e is a schematic structural diagram illustrating the optical system of the third implementation at a long focal length end.

FIG. 3f illustrates a longitudinal spherical aberration curve, an astigmatic field curve, and a distortion curve of FIG. 3e.

FIG. 4a is a schematic structural diagram illustrating an optical system of a fourth implementation at a short focal length end.

FIG. 4b illustrates a longitudinal spherical aberration curve, an astigmatic field curve, and a distortion curve of FIG. 4a.

FIG. 4c is a schematic structural diagram illustrating the optical system of the fourth implementation at a medium focal length end.

FIG. 4d illustrates a longitudinal spherical aberration curve, an astigmatic field curve, and a distortion curve of FIG. 4c.

FIG. 4e is a schematic structural diagram illustrating the optical system of the fourth implementation at a long focal length end.

FIG. 4f illustrates a longitudinal spherical aberration curve, an astigmatic field curve, and a distortion curve of FIG. 4e.

FIG. 5a is a schematic structural diagram illustrating an optical system of a fifth implementation at a short focal length end.

FIG. 5b illustrates a longitudinal spherical aberration curve, an astigmatic field curve, and a distortion curve of FIG. 5a.
FIG. 5c is a schematic structural diagram illustrating the optical system of the fifth implementation at a medium focal length end.
FIG. 5d illustrates a longitudinal spherical aberration curve, an astigmatic field curve, and a distortion curve of FIG. 5c.
FIG. 5e is a schematic structural diagram illustrating the optical system of the fifth implementation at a long focal length end.
FIG. 5f illustrates a longitudinal spherical aberration curve, an astigmatic field curve, and a distortion curve of FIG. 5e.
FIG. 6a is a schematic structural diagram illustrating an optical system of a sixth implementation at a short focal length end.
FIG. 6b illustrates a longitudinal spherical aberration curve, an astigmatic field curve, and a distortion curve of FIG. 6a.
FIG. 6c is a schematic structural diagram illustrating the optical system of the sixth implementation at a medium focal length end.
FIG. 6d illustrates a longitudinal spherical aberration curve, an astigmatic field curve, and a distortion curve of FIG. 6c.
FIG. 6e is a schematic structural diagram illustrating the optical system of the sixth implementation at a long focal length end.
FIG. 6f illustrates a longitudinal spherical aberration curve, an astigmatic field curve, and a distortion curve of FIG. 6e.

The following describes technical solutions in implementations of the disclosure clearly and completely in conjunction with accompanying drawings in the implementations of the disclosure. Obviously, the described implementations are only a part rather than all of the implementations of the disclosure. Based on the implementations of the disclosure, all other implementations obtained by those of ordinary skill in the art without creative work shall fall within the protection scope of the disclosure.

In a first aspect, the disclosure provides an optical system. The optical system includes sequentially from an object side to an image side along an optical axis: a first lens with a positive refractive power, a second lens with a negative refractive power, a third lens with a positive refractive power, a fourth lens with a negative refractive power, a fifth lens with a positive refractive power, a sixth lens with a refractive power, and a seventh lens with a refractive power. The first lens has an object-side surface which is convex near the optical axis. The second lens has an object-side surface which is concave near the optical axis and an image-side surface which is concave near the optical axis. The third lens has an object-side surface which is convex near the optical axis and an image-side surface which is convex near the optical axis. The fourth lens has an object-side surface which is concave near the optical axis. The fifth lens has an object-side surface which is convex near the optical axis. The sixth lens has an object-side surface which is concave near the optical axis. The seventh lens has an image-side surface which is concave near the optical axis. Each of the object-side surface and the image surface of the seventh lens has at least one inflection point. The optical system satisfies an expression: $-2 < fcj/F67 < -1.4$, where $fcj$ represents an effective focal length of the optical system at the long focal length end, and F67 represents a combined focal length of the sixth lens and the seventh lens.

The first lens and the second lens are fixed relative to one another and constitute a first lens group. The first lens group is fixed. The third to fifth lenses are fixed relative to one another and constitute a second lens group. The sixth lens and the seventh lens are fixed relative to one another and constitute a third lens group. The second lens group and the third lens group are movable along the optical axis to switch among a long focal length end, a medium focal length end, and a short focal length end in sequence.

The first lens and the fifth to seventh lenses are aspheric lenses. The second to fourth lenses are spheric lenses. The first lens has the positive refractive power, which enables a higher luminous flux for the optical system and reduces a possibility of occurrence of vignetting in the imaging surface. The object-side surface of the first lens is convex near the optical axis, resulting in a larger angle of view of the optical system. The object-side surface and the image-side surface of the second lens are concave near the optical axis, which can improve the negative refractive power of the second lens and is conductive to reduce a deflection angle of edge field of view, so that the light may transition more smoothly to the second lens group and distortion generated by the front lens group can be well corrected. The fifth lens has the positive refractive power, which can balance well on-axis aberration of the optical system, thus improving resolution of the optical system. The third lens group has a reasonable distribution of refractive powers, which can effectively reduce aberration. In addition, a surface profile of the image-side surface of the seventh lens may be adjusted as needed, so that an incident angle of light incident into the imaging surface can be adjusted as needed, which can ensure relative illuminance at the edge of the imaging surface. The optical system of the present disclosure may also be equipped with a photosensitive element with higher resolution, thus further improving imaging quality. By making the optical system satisfy the above expression, the negative refractive power of the third lens group can be reasonably exploited, which is beneficial to increase an effective focal length at the long focal length end, so that the optical system can obtain a large zoom ratio.

Optionally, the first to seventh lenses are aspheric lenses. In an implementation, the first lens and the fifth to seventh lenses are aspheric lenses, and the second to fourth lenses are spheric lenses.

In an implementation, the first to seventh lenses may be made of plastic, glass, or a mixture of glass and plastic. Through the setting of the glass material, aberration can be corrected by using the aspheric lens, which can cooperate with the spherical lens to effectively eliminate shift of back focus caused by a change of a refractive index of the lens with temperature, so that the lens module can still have good resolution in high temperature and low temperature environments, thus achieving high resolution while ensuring imaging quality.

A prism is disposed in front of the optical system, which can help the lenses to be better arranged in a mobile phone, save space for the mobile phone, and achieve an effect of a periscope lens, thereby achieving miniaturization. By making the optical system satisfy the above expression, the negative refractive power of the third lens group can be reasonably exploited, which is beneficial to increase the effective focal length at the long focal length end, thereby enabling the optical system to obtain a large zoom ratio.

Referring to FIGS. 1a-6a, FIGS. 1c-6c, and FIGS. 1e-6e, a right-angle prism E is disposed at the object-side surface of the first lens. The right-angle prism E has an incident surface A1, a reflective surface A2, and an emission surface A3. The incident surface A1 and the emission surface A3 is perpendicularly connected, and the reflective surface A2 is connected with the incident surface A1 and the emission surface A3. It can be understood that the light enters the incident surface A1 of the right-angle prism E perpendicularly, and is totally reflected by the reflective surface A2 of the right-angle prism E and then exits from the emission surface A3, so as to deflect the light and make the light enter the lens part. The optical system of the present disclosure can be used with the prism, so as to save space, realize the effect of periscope, and facilitate the miniaturization design of the lens module and the electronic device.

In this disclosure, the first lens and the second lens constitute the first lens group, the third to fifth lenses constitute the second lens group, and the sixth lens and the seventh lens constitute the third lens group.

By configuring the right-angle prism to deflect the light, a periscope structure is formed. One the one hand, the periscope structure is installed on the electronic device, which can realize telephoto shooting and make telephoto shooting more stable. On the other hand, the periscope lens is designed in parallel with a body, which can make up for thickening of the body caused by optical zooming. At the same time, the electronic device installed with the periscope structure also has effects that a difference between sharpness at the center and the edge is small, and fineness of an image is well balanced.

In an implementation, the third lens is cemented with the fourth lens. The optical system satisfies an expression: $-1.6 < r32/f345 < -0.9$ or $1 < j5/r51 < 2$, where $r32$ represents a radius of curvature of the image-side surface of the third lens at the optical axis, $f345$ represents a combined effective focal length of the third to fifth lenses, $f5$ represents an effective focal length of the fifth lens, and $r51$ represents a radius of curvature of the object-side surface of the fifth lens at the optical axis. The third lens is engaged with the fourth lens by cement, which is beneficial to correct aberration of the first lens group and beneficial for the optical system to obtain a larger focal length at the long focal length end, thereby increasing a zoom range. By making the optical system satisfy the expression $1 < f5/r51 < 2$, the focal length of the fifth lens and curvature of the object-side surface near the optical axis can be reasonably configured, which is beneficial to ensure manufacturability of the fifth lens, shorten a system total length, correct aberration generated by the front lens, and ensure that edge light can smoothly transition to the third lens group, so as to obtain higher relative brightness, thus improving imaging quality. By making the optical system satisfy the expression $-1,6 < r32/f345 < -0.9$, the ratio can be controlled within a reasonable range, which is beneficial for the third lens to be cemented with the fourth lens, and the cemented lens can have a cemented surface with reasonable curvature, which can ensure manufacturability of the cemented lens, so that the second lens group can provide enough positive refractive power for the optical system. In addition, aberration generated by the front and rear lenses can be effectively corrected and overall aberration balance can be achieved, improving system resolution.

In an implementation, the optical system satisfies an expression: $2.01 > fcj/fdj > 1.7$, where $fcj$ represents an effective focal length of the optical system at the long focal length end, $fdj$ represents an effective focal length of the optical system at the short focal length end. When the ratio of the focal length at the long focal length end to the focal length at the short focal length end is greater than 1.7, the optical system can obtain a large zoom ratio on the premise of balancing performance and technological feasibility, so that an electronic device equipped with the lens module can have a large zoom range. Therefore, the optical system of the present disclosure have characteristics of large zoom range, good distortion correction, and high resolution.

In an implementation, the optical system satisfies an expression: $1 < f5/r51 < 2$, where $f5$ represents an effective focal length of the fifth lens, and r51 represents a radius of curvature of the object-side surface of the fifth lens at the optical axis. By making the optical system satisfy the above expression, the fifth lens can provide the positive refractive power for the second lens group, which facilitates to ensure manufacturability of the fifth lens, shorten the system total length, correct aberration generated by the front lens, and ensure that edge light can smoothly transition to the third lens group, so as to obtain higher relative brightness, thus improving imaging quality.

In an implementation, the optical system satisfies an expression: $-1.6 < f4/f3 < -1.2$, where $f3$ represents an effective focal length of the third lens and $f4$ represents an effective focal length of the fourth lens. By making the optical system satisfy the above expression, when the third lens and the fourth lens constitute the cemented lens, the cemented lens can provide a reasonable refractive power for the second lens group. By reasonably distributing the positive refractive power of the third lens and the negative refractive power of the fourth lens, the manufacturability of the third lens and the fourth lens can be ensured, so that assembly stability of the lenses can be improved and the optical system can obtain good imaging quality.

In an implementation, the third lens is cemented with the fourth lens. The optical system satisfies an expression: $-1.6 < r32/f345 < -0.9$, where $r32$ represents a radius of curvature of the image-side surface of the third lens at the optical axis, $f345$ represents a combined effective focal length of the third to fifth lenses. By making the optical system satisfy the above expression, the ratio can be controlled within a reasonable range, which is beneficial for the third lens to be cemented with the fourth lens, and the cemented lens can have a cemented surface with reasonable curvature, which can ensure manufacturability of the cemented lens, so that the second lens group can provide enough positive refractive power for the optical system. In addition, aberration generated by the front and rear lenses can be effectively corrected and overall aberration balance can be achieved, improving system resolution.

In an implementation, the optical system satisfies an expression: $-4 < r61/r72 < -1.2$, where $r72$ represents a radius of curvature of the image-side surface of the seventh lens at the optical axis and $r61$ represents a radius of curvature of the object-side surface of the sixth lens at the optical axis. By making the optical system satisfy the above expression, a surface profile of a lens surface of the third lens group near the object side and a surface profile of a lens surface of the third lens group near the image side can be reasonably constrained, which is beneficial to obtain a reasonable deflection angle for light of edge field of view, and is conductive to correct aberration of the optical system and improve imaging quality. In addition, manufacturability of the sixth lens and the seventh lens can be ensured. If $r61/r72$ exceeds the upper limit in the expression, the surface profile of the image-side surface of the seventh lens are too flat, which is unfavorable for aberration correction. If $r61/r72$ is less than the lower limit in the expression, the surface profile of the image-side surface of the seventh lens has severe curvature, which significantly increases processing difficulty of the lens.

In an implementation, the optical system satisfies an expression: $(n2+n3+n4)/n3 > 3.1$, where n2 is a refractive index of the second lens, n3 is a refractive index of the third lens, and n4 is a refractive index of the fourth lens. By making the optical system satisfy the above expression and selecting a material of the second to fourth lenses as glass, overall stability of the lenses in high temperature and high humidity environments can be improved. By reasonably configuring refractive indexes of the second lens to the fourth lens, chromatic aberration of the optical system can be corrected, an overall weight of the lens can be reduced, and imaging quality can be improved.

In an implementation, the optical system satisfies an expression: $4 < d3dj/d1cj < 10$, where $d3dj$ represents a distance on the optical axis from the image-side surface of the seventh lens to an object-side surface of an infrared cut-off filter when the optical system is at the short focal length end, and $d1cj$ represents a distance on the optical axis from the image-side surface of the second lens to the object-side surface of the third lens when the optical system is at the long focal length end. By making the optical system satisfy the above expression, on the one hand, the optical system can have an improved zoom ratio, so that a variation range of magnification can be expanded. On the other hand, a safe and reasonable distance can be maintained among the respective lens groups during zooming, so that stability of magnification switching during shooting can be improved.

In an implementation, the optical system satisfies an expression: $5.4 < TTL/ImgH < 5.7$, where $TTL$ represents a distance on the optical axis from the object-side surface of the first lens to an imaging surface of the optical system, and $ImgH$ represents half of an image height corresponding to a maximum angle of view of the optical system. By making the optical system satisfy the above expression, a total size of the optical lenses can be effectively reduced, and sensitivity of the system can be reduced. In addition, the optical system can obtain a larger focal length at the long focal length end and a zoom ratio can be improved. Moreover, the optical system can be configured with a photosensitive element with higher resolution, so that a photographed image can be clearer and more details of an object photographed can be presented.

In an implementation, the optical system satisfies an expression: $fdj/EPDdj < 2.9$, where $fdj$ represents an effective focal length of the optical system at the short focal length end, and $EPDdj$ represents an entrance pupil diameter of the optical system at the short focal length end. By making the optical system satisfy the above expression, the ratio can be controlled within a reasonable range, which is beneficial to shorten the system total length and achieve miniaturization of the optical system. In addition, an aperture of the optical system can be enlarged, so that the optical system can obtain enough luminous flux even in a dark environment, thus improving imaging quality.

In an implementation, the optical system satisfies an expression: $sd11dj/\tan(Hfovdj) < 12$, where $sd11dj$ represents half of a maximum clear aperture of the object-side surface of the first lens when the optical system is at the short focal length end, and $Hfovdj$ represents half of an angle of view when the optical system is at the short focal length end. By making the optical system satisfy the above expression, a size of the lens can be reduced, so that the electronic device equipped with the optical system can have more space. In addition, a relative large angle of view can be ensured at the short focal length end, so that the optical system can capture a wider range of scene when shooting. When $sd11dj/\tan(Hfovdj)$ is greater than the upper limit in the expression, the half of a maximum clear aperture of the object-side surface of the first lens is too large, which is unfavorable for miniaturization of the optical system.

In an implementation, the optical system satisfies an expression: $4<TTL/ctg.3<7$ or $5.4<TTL/ImgH<5.7$, where $TTL$ represents a distance on the optical axis from the object-side surface of the first lens to an imaging surface of the optical system, and $ctg3$ represents a distance on the optical axis from the object-side surface of the sixth lens to the image-side surface of the seventh lens. By making the optical system satisfy the expression $4<TTL/ctg3<7$, the ratio is controlled within a reasonable range, which facilitates to shorten the system total length. By reasonably configuring the proportion of the total length of the third lens group, the third lens group can cooperate with other lens groups, thereby improving the stability of the optical system. When the ratio is less than the lower limit in the expression, the total length of the third lens group is too large, which is not conducive to shorten the total length of the system. When the ratio is higher than the upper limit in the expression, the total length of the third lens group is too small, and a difference between proportions of total lengths of the third lens and other lens groups is too large, thereby reducing the stability of the optical system. By making the optical system satisfy the expression $5.4<TTL/ImgH<5.7$, a total size of the optical lenses can be effectively reduced, and sensitivity of the system can be reduced. In addition, the optical system can obtain a larger focal length at the long focal length end and a zoom ratio can be improved. Moreover, the optical system can be configured with a photosensitive element with higher resolution, so that a photographed image can be clearer and more details of an object photographed can be presented.

A lens module is provided in the present disclosure. The lens module includes a lens barrel, a photosensitive element, and the optical system. The first to seventh lenses of the optical system are installed inside the lens barrel, and the photosensitive element is disposed at the image side of the optical system.

The lens module may be an imaging module integrated on an electronic device, or may be an independent lens. By adding the optical system provided in the present disclosure to the lens module, the lens module can have a wider zoom range, and realize a larger image surface. In addition, it is also beneficial to reduce a size of the lens module, so that the lens module can have characteristics of large zoom range, good distortion correction, and high resolution.

An electronic device is provided in the present disclosure. The electronic device includes a housing and the lens module. The lens module is received in the housing.

An electronic device is provided in implementations of the present disclosure. The electronic device includes a housing and a lens module provided in the implementations of the present disclosure, and the lens module is received in the housing. Further, the electronic device may include an electronic photosensitive element. A photosensitive surface of the electronic photosensitive element is located on an imaging plane of the optical system. Light of an object incident on a photosensitive surface of the electronic photosensitive element through the lens can be converted into an electrical signal of the image. The electronic photosensitive element may be a complementary metal oxide semiconductor (CMOS) or a charge-coupled device (CCD). The electronic device may be a portable electronic device such as a smart phone, a tablet computer, a digital camera, and the like. By adding the lens module provided in the disclosure to the electronic device, the electronic device can have characteristics of large zoom range, good distortion correction, and high resolution.

First implementation

Referring to FIG. 1a to FIG. 1f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 which is convex near the optical axis and an image-side surface S2 which is concave near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 and an image-side surface S8 which are concave near the optical axis.

The fifth lens L5 has an object-side surface S9 and an image-side surface S10 which are convex near the optical axis. The object-side surface S9 is convex near a periphery and the image-side surface S10 is concave near a periphery.

The sixth lens L6 has an object-side surface S11 which is concave near the optical axis and an image-side surface S12 which is convex near the optical axis. The object-side surface S11 is convex near a periphery and the image-side surface S2 is concave near a periphery.

The seventh lens L7 has an object-side surface S13 and an image-side surface S14 which are concave near the optical axis. The object-side surface S13 and the image-side surface S4 are convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Object-side surfaces and image-side surfaces of the first lens and the fifth to seventh lens are aspheric surfaces. The third lens may be cemented with the fourth lens.

In addition, the optical system may further includes an infrared (IR) cut-off filter IR and an imaging surface IMG. In this implementations, the infrared cut-off filter IR is disposed between the seventh lens L7 and the imaging surface IMG and includes an object-side surface S15 and an image-side surface S16. The infrared cut-off filter IR is configured to filter out infrared light, so that light incident into the imaging surface IMG is visible light which has a wavelength of 380nm-780nm. The infrared cut-off filter IR is made of glass and the glass may be coated. An effective pixel area of an electronic photosensitive element is located on the imaging surface IMG.

Table 1a and Table 1b illustrate characteristics of the optical system of this implementation. Y radius is a radius of curvature of the object-side surface or the image-side surface with corresponding surface number at the optical axis. Surface number S1 represents the object-side surface S1 of the first lens L1 and surface number S2 represents the image-side surface S2 of the first lens L1. That is, in a same lens, the object-side surface has a smaller surface number and the image-side surface has a larger surface number. The first value in the "thickness" parameter column of the first lens L1 is a thickness of the lens on the optical axis, and the second value is a distance on the optical axis from the image-side surface of the lens to the immediately rear surface in the image side direction. A reference wavelength of the focal length of the lens is 555nm. A refractive index and Abbe number of the lens are obtained using visible light with a reference wavelength of 587.6nm. The units of Y radius, thickness, and effective focal length are all millimeters (mm).

Table 1a

| First implementation | | | | | | | | |
|---|---|---|---|---|---|---|---|---|
| f=13.54mm3, 18.203mm, 23.217mm;FNO=2.812, 3.384, 3.865; FOV=37.395deg, 27.906deg, 21.88deg; TTL=25 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 8.55711 | 1.4986 | plastic | 1.588 | 28.32 | 17.337 |
| S2 | | aspheric | 50.06138 | 0.8177 | | | | |
| S3 | L2 | spheric | -12.06721 | 0.5759 | glass | 1.744 | 44.90 | -8.028 |
| S4 | | spheric | 12.06721 | D1 | | | | |
| S5 | L3 | spheric | 6.79873 | 2.2338 | glass | 1.665 | 54.66 | 5.883 |
| S6 | | spheric | -7.99364 | 0.0050 | | | | |
| S7 | L4 | spheric | -7.99364 | 0.9278 | glass | 1.859 | 30.00 | -7.593 |
| S8 | | spheric | 37.28944 | 0.3230 | | | | |
| S9 | L5 | aspheric | 8.88923 | 2.4178 | plastic | 1.544 | 56.11 | 10.977 |
| S10 | | aspheric | -16.45870 | D2 | | | | |
| S11 | L6 | aspheric | -7.01636 | 2.5283 | plastic | 1.671 | 19.24 | 38.807 |
| S12 | | aspheric | -6.32772 | 0.1548 | | | | |
| S13 | L7 | aspheric | -384.44435 | 1.8978 | plastic | 1.544 | 56.11 | -10.289 |
| S14 | | aspheric | 5.69106 | D3 | | | | |
| S15 | Filter IR | spheric | infinity | 0.2100 | glass | 1.517 | 64.17 | |
| S16 | | spheric | infinity | 1.1594 | | | | |

(continued)

| First implementation | | | | | | | | |
|---|---|---|---|---|---|---|---|---|
| f=13.54mm3, 18.203mm, 23.217mm;FNO=2.812, 3.384, 3.865; FOV=37.395deg, 27.906deg, 21.88deg; TTL=25 | | | | | | | | |
| Surface number | Surface name | Surface type | Y radius | Thickness | Material | Refractive index | Abbe number | Focal length |
| Object surface | Object surface | spheric | infinity | infinity | | | | |
| IMG | Imaging surface | spheric | infinity | 0.0000 | | | | |

Table 1b

| Variable distance | D1 | D2 | D3 |
|---|---|---|---|
| Short focal length end | 4 | 4.885060005 | 1.364610824 |
| medium focal length end | 2 | 4.25 | 4 |
| long focal length end | 0.149 | 4.4 | 5.7 |

In Table 1a, f represents an effective focal length of the optical system. FNO represents an F-number of the optical system. FOV represents the maximum angle of view of the optical system. TTL represents a distance on the optical axis from the object-side surface of the first lens to the imaging surface of the optical system. D1 represents a distance on the optical axis from the image-side surface S4 of the second lens to the object-side surface S5 of the third lens. D2 represents a distance on the optical axis from the image-side surface S10 of the fifth lens to the object-side surface S11 of the sixth lens. D3 represents a distance on the optical axis from the image-side surface S14 of the seventh lens to the object-side surface S15 of the IR filter. Table 1b illustrates values of D1, D2, and D3 when the optical system is at the short focal length end, medium focal length end, or long focal length end.

When the optical system is at the short focal length end, fd=13.543mm, FNO=2.812, FOV=37.395°. When the optical system is at the medium focal length end, fz=18.203mm, FNO=3.384, FOV=27.906°. When the optical system is at the long focal length end, fc=23.217mm, FNO=3.865, FOV=21.88°.

Table 1c illustrates high-order term coefficients which can be used for the aspheric surfaces in this implementation. In this implementation, the object-side surfaces and the image-side surfaces of the first lens L1 and the fifth lens L5 to seventh lens L7 are all aspheric surfaces. The surface profile x of the aspheric surface can be limited by (but is not limited to) the following expression:

$$x = \frac{ch^2}{1 + \sqrt{1 - (k+1)\, c^2 h^2}} + \sum A_i h^i$$

In this expression, x represents a distance from a corresponding point on the aspheric surface to a plane tangent to a vertex of the surface, h represents a distance from the corresponding point on the aspheric surface to the optical axis, c represents a curvature of the vertex of the aspheric surface, k represents a conic coefficient, and $A_i$ represents a coefficient corresponding to the i-th high-order term in the aspheric surface profile expression. Table 1b shows high-order term coefficients A4, A6, A8, A10, A12, A14, A16, A18, and A20 which can be used for the aspheric surfaces S1, S2, S8, S9, S10, S11, S12, and S13 in this implementation.

Table 1c

| Number | k | A4 | A6 | A8 | A10 |
|---|---|---|---|---|---|
| S1 | -1.208E+00 | 7.041E-04 | 4.234E-06 | 7.524E-06 | -7.103E-07 |
| S2 | 1.273E+01 | 2.689E-04 | 3.953E-06 | 9.614E-06 | -1.074E-06 |

(continued)

| Number | k | A4 | A6 | A8 | A10 |
|---|---|---|---|---|---|
| S9 | -1.960E+01 | 3.449E-03 | -3.150E-04 | 3.881E-05 | -2.645E-06 |
| S10 | -2.284E+01 | 8.280E-04 | 6.757E-05 | 4.909E-06 | -3.915E-07 |
| S11 | 1.145E+00 | 4.612E-03 | -3.008E-04 | 7.332E-05 | -1.502E-05 |
| S12 | 7.274E-02 | -5.007E-03 | 3.362E-03 | -1.107E-03 | 2.546E-04 |
| S13 | 9.800E+01 | -2.045E-02 | 5.020E-03 | -1.411E-03 | 3.062E-04 |
| S14 | -6.933E+00 | -8.707E-03 | 1.164E-03 | -1.457E-04 | 1.435E-05 |
| Number | A12 | A14 | A16 | A18 | A20 |
| S1 | 4.271E-08 | 0.000E+00 | 0.000E+00 | 0.000E+00 | 0.000E+00 |
| S2 | 7.493E-08 | 0.000E+00 | 0.000E+00 | 0.000E+00 | 0.000E+00 |
| S9 | 9.666E-08 | 0.000E+00 | 0.000E+00 | 0.000E+00 | 0.000E+00 |
| S10 | 5.617E-08 | 0.000E+00 | 0.000E+00 | 0.000E+00 | 0.000E+00 |
| S11 | 2.563E-06 | -2.773E-07 | 1.700E-08 | -4.468E-10 | 0.000E+00 |
| S12 | -3.961E-05 | 3.967E-06 | -2.282E-07 | 5.709E-09 | 0.000E+00 |
| S13 | -4.646E-05 | 4.598E-06 | -2.634E-07 | 6.555E-09 | 0.000E+00 |
| S14 | -9.823E-07 | 4.215E-08 | -1.004E-09 | 9.491E-12 | 0.000E+00 |

FIG. 1b, FIG. 1d, and FIG. 1f illustrate in (a) respectively longitudinal spherical aberration curves in different focal lengths for the optical system in this implementation under wavelengths of 650nm, 610nm, 555nm, 510nm, and 470nm. The abscissa along the X axis represents focus deviation, and the ordinate along the Y axis represents the normalized field of view. The longitudinal spherical aberration curves represent focus deviation of lights with different wavelengths after passing through the lenses in the optical system. As can be seen from (a) in FIG. 1b, FIG. 1d, and FIG. 1f, the optical system in this implementation has good spherical aberration, which indicates that the optical system has good image quality.

FIG. 1b, FIG. 1d, and FIG. 1f illustrate in (b) respectively astigmatic field curves in different focal lengths for the optical system in this implementation under a wavelength of 555nm. The abscissa along the X axis represents the focus deviation, and the ordinate along the Y axis represents the image height in mm. The astigmatic field curves represent tangential field curvature T2 and sagittal field curvature S2. As can be seen from (b) in FIG. 1b, FIG. 1d, and FIG. 1f, the astigmatism of the optical system is well compensated.

FIG. 1b, FIG. 1d, and FIG. 1f illustrate in (c) respectively distortion curves in different focal lengths for the optical system in this implementation under a wavelength of 555nm. The abscissa along the X axis represents the focus deviation, and the ordinate along the Y axis represents the image height. The distortion curves represent distortion values corresponding to different angles of view. As can be seen from (c) in FIG. 1b, FIG. 1d, and FIG. 1f, the distortion of the optical system is well corrected under the wavelength of 555nm.

It can be seen from (a), (b), and (c) in FIG. 1b, FIG. 1d, and FIG. 1f that the optical system of this implementation has small aberration, good imaging performance, and good image quality.

Second implementation

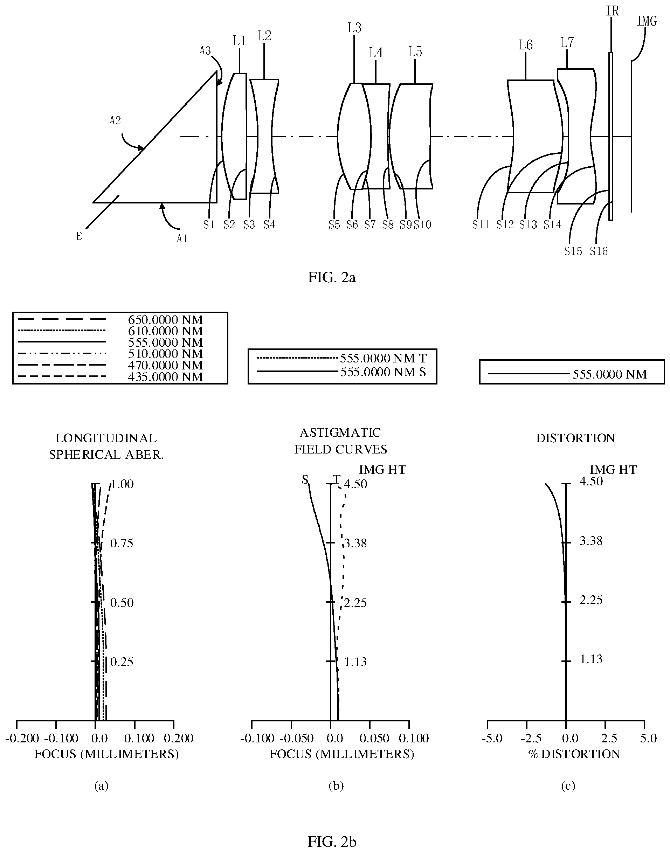

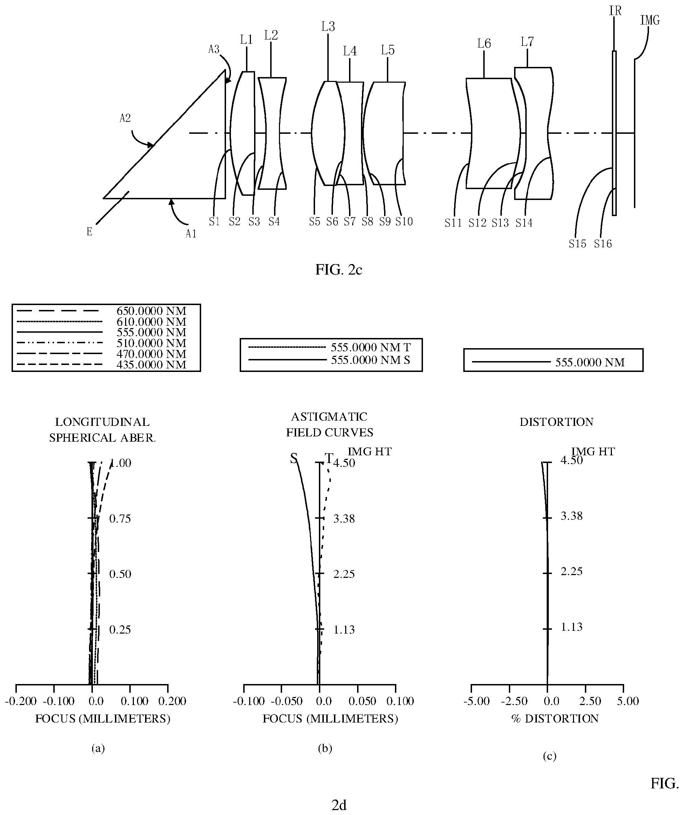

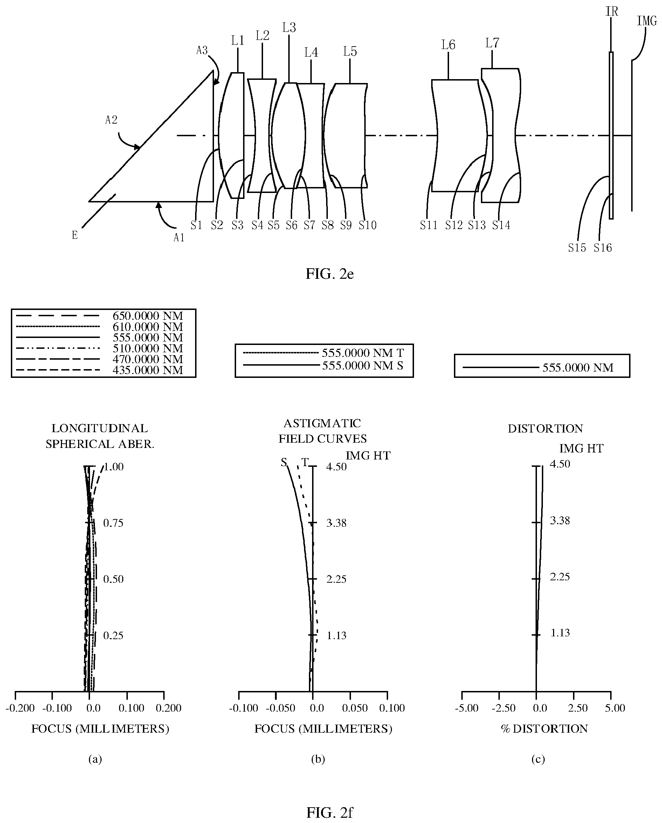

Referring to FIG. 2a to FIG. 2f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 and an image-side surface S2 which are convex near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 and an image-side surface S8 which are concave near the optical axis.

The fifth lens L5 has an object-side surface S9 and an image-side surface S10 which are convex near the optical axis. The object-side surface S9 is convex near a periphery and the image-side surface S10 is concave near a periphery.

The sixth lens L6 has an object-side surface S11 which is concave near the optical axis and an image-side surface S12 which is convex near the optical axis. The object-side surface S11 is convex near a periphery and the image-side surface S12 is concave near a periphery.

The seventh lens L7 has an object-side surface S13 which is convex near the optical axis and an image-side surface S14 which is concave near the optical axis. The object-side surface S13 is concave near a periphery and the image-side surface S14 is convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Other structures of the second implementation are the same of that of the first implementation, and reference may be made to the above.

Table 2a and Table 2b illustrate characteristics of the optical system of this implementation. A reference wavelength of the focal length of the lens is 555nm. A refractive index and Abbe number of the lens are obtained using visible light with a reference wavelength of 587.6nm. The units of Y radius, thickness, and effective focal length are all millimeters (mm). Other parameters have the same meaning as the parameters of the first implementation.

Table 2a

| Second implementation | | | | | | | | |
|---|---|---|---|---|---|---|---|---|
| *f*=13.443mm, 18.208mm, 23.124mm; *FNO*=2.812, 3.384, 3.865; | | | | | | | | |
| *FOV*=37.534deg, 27.873deg, 21.934deg; *TTL*=25 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 10.4671 | 1.5183 | plastic | 1.588 | 28.325 | 17.604 |
| S2 | | aspheric | -820.1605 | 0.6967 | | | | |
| S3 | L2 | spheric | -12.4738 | 0.8281 | glass | 1.744 | 44.903 | -8.266 |
| S4 | | spheric | 12.4738 | D1 | | | | |
| S5 | L3 | spheric | 6.6214 | 2.0437 | glass | 1.665 | 54.657 | 6.131 |
| S6 | | spheric | -9.2872 | 0.0050 | | | | |
| S7 | L4 | spheric | -9.2872 | 1.0208 | glass | 1.859 | 29.997 | -8.640 |
| S8 | | spheric | 38.7860 | 0.1000 | | | | |
| S9 | L5 | aspheric | 8.5505 | 2.4766 | plastic | 1.544 | 56.114 | 13.043 |
| S10 | | aspheric | -37.4815 | D2 | | | | |
| S11 | L6 | aspheric | -8.7187 | 2.9836 | plastic | 1.671 | 19.244 | 56.968 |
| S12 | | aspheric | -8.0760 | 0.3430 | | | | |
| S13 | L7 | aspheric | 14.4070 | 1.3499 | plastic | 1.544 | 56.114 | -12.246 |
| S14 | | aspheric | 4.4055 | D3 | | | | |
| S15 | Filter IR | spheric | infinity | 0.2100 | glass | 1.517 | 64.166 | |
| S16 | | spheric | infinity | 1.1594 | | | | |

(continued)

| Second implementation | | | | | | | | |
|---|---|---|---|---|---|---|---|---|
| f=13.443mm, 18.208mm, 23.124mm; FNO=2.812, 3.384, 3.865; | | | | | | | | |
| FOV=37.534deg, 27.873deg, 21.934deg; TTL=25 | | | | | | | | |
| Surface number | Surface name | Surface type | Y radius | Thickness | Material | Refractive index | Abbe number | Focal length |
| Object surface | Object surface | spheric | infinity | infinity | | | | |
| IMG | Imaging surface | spheric | infinity | 0.0000 | | | | |

Table 2b

| Variable distance | D1 | D2 | D3 |
|---|---|---|---|
| Short focal length end | 4.03 | 5.090534372 | 1.145446742 |
| medium focal length end | 2 | 4.25 | 4.014705713 |
| long focal length end | 0.163705713 | 4.4 | 5.7 |

In Table 2a, *f* represents an effective focal length of the optical system. *FNO* represents an F-number of the optical system. *FOV* represents the maximum angle of view of the optical system. *TTL* represents a distance from the object-side surface of the first lens to the imaging surface of the optical system on the optical axis. D1 represents a distance from the image-side surface S4 of the second lens to the object-side surface S5 of the third lens on the optical axis. D2 represents a distance from the image-side surface S10 of the fifth lens to the object-side surface S11 of the sixth lens on the optical axis. D3 represents a distance from the image-side surface S14 of the seventh lens to the object-side surface S15 of the IR filter on the optical axis. Table 2b illustrates values of D1, D2, and D3 when the optical system is at the short focal length end, medium focal length end, and long focal length end.

When the optical system is at the short focal length end, *fd*=13.443mm, *FNO*=2.812, FOV=37.534°. When the optical system is at the medium focal length end, *fz*=18.208mm, *FNO*=3.384, *FOV*=27.873°. When the optical system is at the long focal length end, *fc*=23.124mm, *FNO*=3.865, *FOV*=21.934°.

Table 2c illustrates high-order term coefficients which can be used for the aspheric surfaces in this implementation. Surface profiles of respective aspheric surfaces can be limited by the expression given in the first implementation.

Table 2c

| Number | k | A4 | A6 | A8 | A10 |
|---|---|---|---|---|---|
| S1 | -4.482E+00 | 5.688E-04 | -1.058E-05 | 2.728E-06 | -2.127E-07 |
| S2 | 9.800E+01 | -2.348E-04 | -1.437E-06 | 1.961E-06 | -1.664E-07 |
| S9 | -1.216E+01 | 2.712E-03 | -1.124E-04 | 1.294E-05 | -5.446E-07 |
| S10 | -6.295E+01 | 1.844E-03 | 5.639E-05 | 1.290E-05 | -1.199E-06 |
| S11 | 3.496E+00 | 3.075E-03 | -1.013E-04 | 1.836E-05 | -5.826E-07 |
| S12 | 1.134E+00 | -4.364E-03 | 2.360E-03 | -6.366E-04 | 1.184E-04 |
| S13 | -2.647E+01 | -2.172E-02 | 4.316E-03 | -8.830E-04 | 1.387E-04 |
| S14 | -7.016E+00 | -9.815E-03 | 1.429E-03 | -2.005E-04 | 2.229E-05 |
| Number | A12 | A14 | A16 | A18 | A20 |
| S1 | 9.197E-09 | 0.000E+00 | 0.000E+00 | 0.000E+00 | 0.000E+00 |
| S2 | 8.593E-09 | 0.000E+00 | 0.000E+00 | 0.000E+00 | 0.000E+00 |
| S9 | 1.643E-08 | 0.000E+00 | 0.000E+00 | 0.000E+00 | 0.000E+00 |

(continued)

| Number | A12 | A14 | A16 | A18 | A20 |
|--------|-----|-----|-----|-----|-----|
| S10 | 1.067E-07 | 0.000E+00 | 0.000E+00 | 0.000E+00 | 0.000E+00 |
| S11 | 1.055E-07 | -2.383E-08 | 2.284E-09 | -7.477E-11 | 0.000E+00 |
| S12 | -1.452E-05 | 1.146E-06 | -5.304E-08 | 1.103E-09 | 0.000E+00 |
| S13 | -1.478E-05 | 1.018E-06 | -4.165E-08 | 7.773E-10 | 0.000E+00 |
| S14 | -1.721E-06 | 8.345E-08 | -2.277E-09 | 2.626E-11 | 0.000E+00 |

FIG. 2b, FIG. 2d, and FIG. 2f illustrate longitudinal spherical aberration curves, astigmatic field curves, and distortion curves for the optical system of this implementation. The longitudinal spherical aberration curve represents focus deviation of lights of different wavelengths after passing through lenses in the optical system. The astigmatic field curve represents sagittal field curvature and tangential field curvature. The distortion curve represents distortion values corresponding to different angles of view. As can be seen from aberration figures in FIG. 2b, FIG. 2d, and FIG. 2f, the longitudinal spherical aberration, the astigmatism, and the distortion of the optical system are well controlled, so that the optical system of this implementation has good image quality.

Third implementation

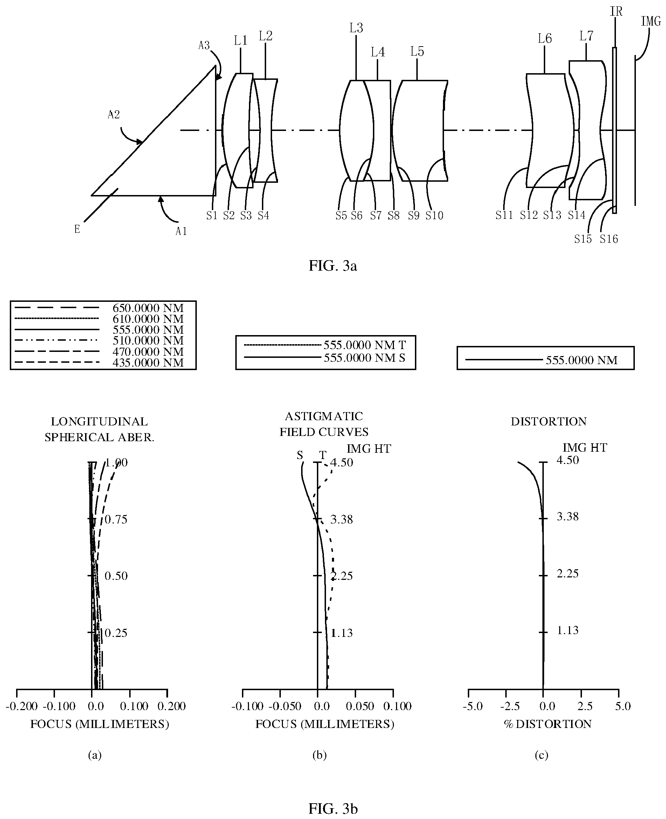

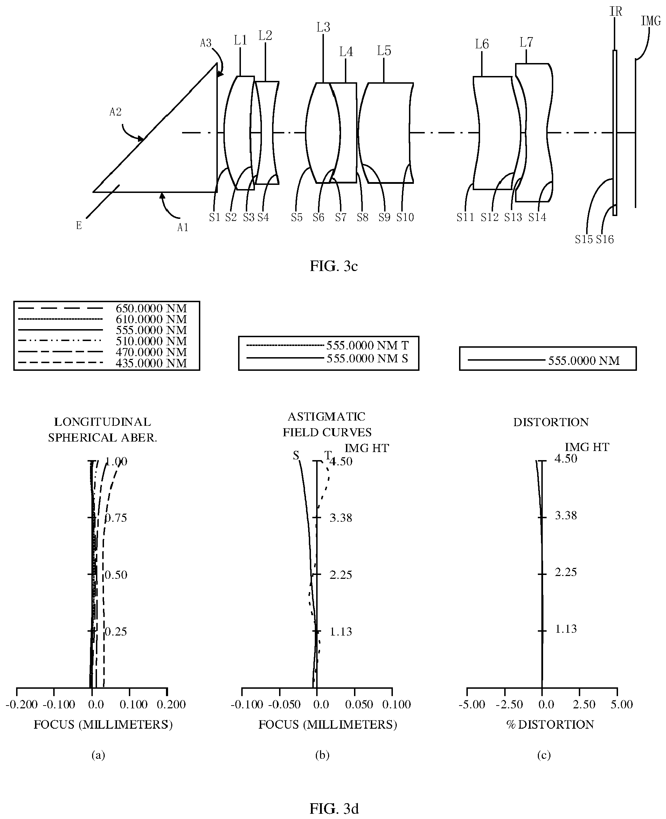

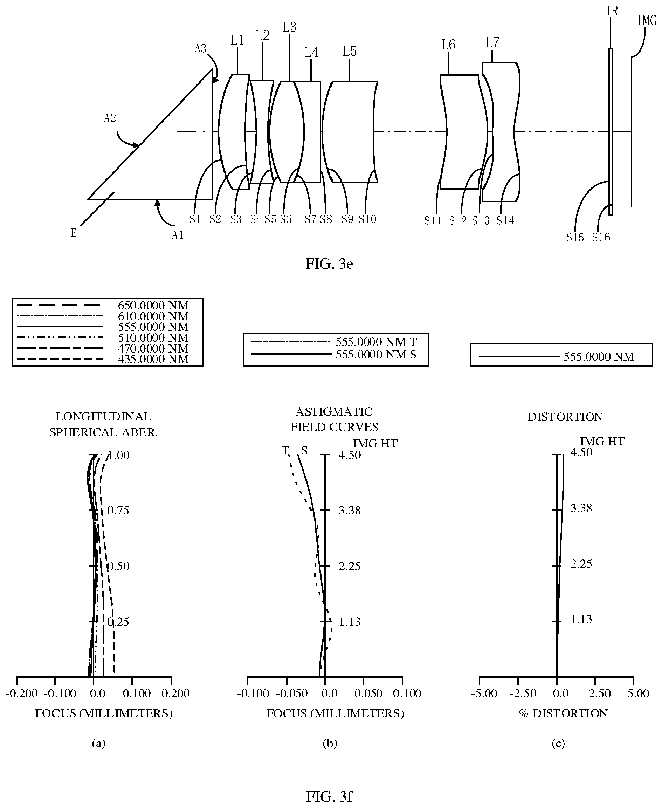

Referring to FIG. 3a to FIG. 3f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 which is convex near the optical axis and an image-side surface S2 which is concave near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 which is concave near the optical axis and an image-side surface S8 which is convex near the optical axis.

The fifth lens L5 has an object-side surface S9 which is convex near the optical axis and an image-side surface S10 which is concave near the optical axis. The object-side surface S9 is convex near a periphery and the image-side surface S10 is concave near a periphery.

The sixth lens L6 has an object-side surface S11 which is concave near the optical axis and an image-side surface S12 which is convex near the optical axis. The object-side surface S11 is convex near a periphery and the image-side surface S12 is concave near a periphery.

The seventh lens L7 has an object-side surface S13 which is convex near the optical axis and an image-side surface S14 which is concave near the optical axis. The object-side surface S13 is concave near a periphery and the image-side surface S14 is convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Other structures of the third implementation are the same of that of the first implementation, and reference may be made to the above.

Table 3a and Table 3b illustrate characteristics of the optical system of this implementation. A reference wavelength of the focal length of the lens is 555nm. A refractive index and Abbe number of the lens are obtained using visible light with a reference wavelength of 587.6nm. The units of Y radius, thickness, and effective focal length are all millimeters (mm). Other parameters have the same meaning as the parameters of the first implementation.

Table 3a

| Third implementation | | | | | | | | |
|---|---|---|---|---|---|---|---|---|
| f=13.186mm, 18.181mm, 23.23mm; *FNO*=2.491, 3.126, 3.615; *FOV*=38.338deg, 27.895deg, 21.808deg; *TTL*=25 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 8.8263 | 1.6210 | plastic | 1.588 | 28.325 | 19.978 |
| S2 | | aspheric | 33.1702 | 0.6665 | | | | |
| S3 | L2 | spheric | -13.2560 | 0.6920 | glass | 1.744 | 44.903 | -8.810 |
| S4 | | spheric | 13.2560 | D1 | | | | |
| S5 | L3 | spheric | 7.2863 | 2.0765 | glass | 1.665 | 54.657 | 5.947 |
| S6 | | spheric | -7.6562 | 0.0050 | | | | |
| S7 | L4 | spheric | -7.6562 | 1.0066 | glass | 1.859 | 29.997 | -9.045 |
| S8 | | spheric | -562.3850 | 0.1000 | | | | |
| S9 | L5 | aspheric | 8.3535 | 3.1192 | plastic | 1.544 | 56.114 | 15.788 |
| S10 | | aspheric | 263.1430 | D2 | | | | |
| S11 | L6 | aspheric | -8.0519 | 2.4839 | plastic | 1.671 | 19.244 | -618.742 |
| S12 | | aspheric | -9.2285 | 0.3094 | | | | |
| S13 | L7 | aspheric | 7.7615 | 1.2962 | plastic | 1.544 | 56.114 | -17.636 |
| S14 | | aspheric | 4.0383 | D3 | | | | |
| S15 | Filter IR | spheric | infinity | 0.2100 | glass | 1.517 | 64.166 | |
| S16 | | spheric | infinity | 1.1594 | | | | |
| IMG | Imaging surface | spheric | infinity | 0.0000 | | | | |

Table 3b

| Variable distance | D1 | D2 | D3 |
|---|---|---|---|
| Short focal length end | 4.11 | 5.387523271 | 0.754084832 |
| medium focal length end | 2 | 4.248294341 | 4 |
| long focal length end | 0.107082438 | 4.4 | 5.747311902 |

In Table 3a, *f* represents an effective focal length of the optical system. *FNO* represents an F-number of the optical system. *FOV* represents the maximum angle of view of the optical system. *TTL* represents a distance from the object-side surface of the first lens to the imaging surface of the optical system on the optical axis. D1 represents a distance from the image-side surface S4 of the second lens to the object-side surface S5 of the third lens on the optical axis. D2 represents a distance from the image-side surface S10 of the fifth lens to the object-side surface S11 of the sixth lens on the optical axis. D3 represents a distance from the image-side surface S14 of the seventh lens to the object-side surface S15 of the IR filter on the optical axis. Table 3b illustrates values of D1, D2, and D3 when the optical system is at the short focal length end, medium focal length end, and long focal length end.

When the optical system is at the short focal length end, *fd*=13.186mm, *FNO*=2.491*, FOV*=38.338°. When the optical system is at the medium focal length end, *fc*=18.181mm, FNO=3.126, FOV=27.895°. When the optical system is at the long focal length end, *fz*=23.23mm, *FNO*=3.615, *FOV*=21.808°.

Table 3c illustrates high-order term coefficients which can be used for the aspheric surfaces in this implementation. Surface profiles of respective aspheric surfaces can be limited by the expression given in the first implementation.

Table 3c

| Number | k | A4 | A6 | A8 | A10 |
|---|---|---|---|---|---|
| S1 | -1.579E+00 | 7.050E-04 | -5.076E-06 | 6.690E-06 | -5.539E-07 |
| S2 | -1.068E+01 | 3.456E-04 | -1.245E-05 | 1.066E-05 | -1.085E-06 |
| S9 | -1.046E+01 | 2.614E-03 | -1.004E-04 | 8.876E-06 | -3.630E-07 |
| S10 | 9.800E+01 | 1.954E-03 | 6.224E-05 | 5.917E-06 | -4.298E-07 |
| S11 | 2.508E+00 | 3.009E-03 | -9.281E-05 | 5.092E-05 | -1.368E-05 |
| S12 | 4.154E+00 | -1.351E-02 | 6.440E-03 | -1.736E-03 | 3.213E-04 |
| S13 | -1.219E+01 | -3.423E-02 | 9.324E-03 | -2.029E-03 | 3.113E-04 |
| S14 | -5.779E+00 | -1.379E-02 | 2.670E-03 | -4.344E-04 | 5.117E-05 |
| Number | A12 | A14 | A16 | A18 | A20 |
| S1 | 2.598E-08 | 0.000E+00 | 0.000E+00 | 0.000E+00 | 0.000E+00 |
| S2 | 5.766E-08 | 0.000E+00 | 0.000E+00 | 0.000E+00 | 0.000E+00 |
| S9 | 9.658E-09 | 0.000E+00 | 0.000E+00 | 0.000E+00 | 0.000E+00 |
| S10 | 6.108E-08 | 0.000E+00 | 0.000E+00 | 0.000E+00 | 0.000E+00 |
| S11 | 2.436E-06 | -2.364E-07 | 1.185E-08 | -2.410E-10 | 0.000E+00 |
| S12 | -3.949E-05 | 3.077E-06 | -1.358E-07 | 2.568E-09 | 0.000E+00 |
| S13 | -3.191E-05 | 2.056E-06 | -7.322E-08 | 1.043E-09 | 0.000E+00 |
| S14 | -4.091E-06 | 2.085E-07 | -6.078E-09 | 7.596E-11 | 0.000E+00 |

FIG. 3b, FIG. 3d, and FIG. 3f illustrate longitudinal spherical aberration curves, astigmatic field curves, and distortion curves for the optical system of this implementation. The longitudinal spherical aberration curve represents focus deviation of lights of different wavelengths after passing through lenses in the optical system. The astigmatic field curve represents sagittal field curvature and tangential field curvature. The distortion curve represents distortion values corresponding to different angles of view. As can be seen from aberration figures in FIG. 3b, FIG. 3d, and FIG. 3f, the longitudinal spherical aberration, the astigmatism, and the distortion of the optical system are well controlled, so that the optical system of this implementation has good image quality.

Fourth implementation

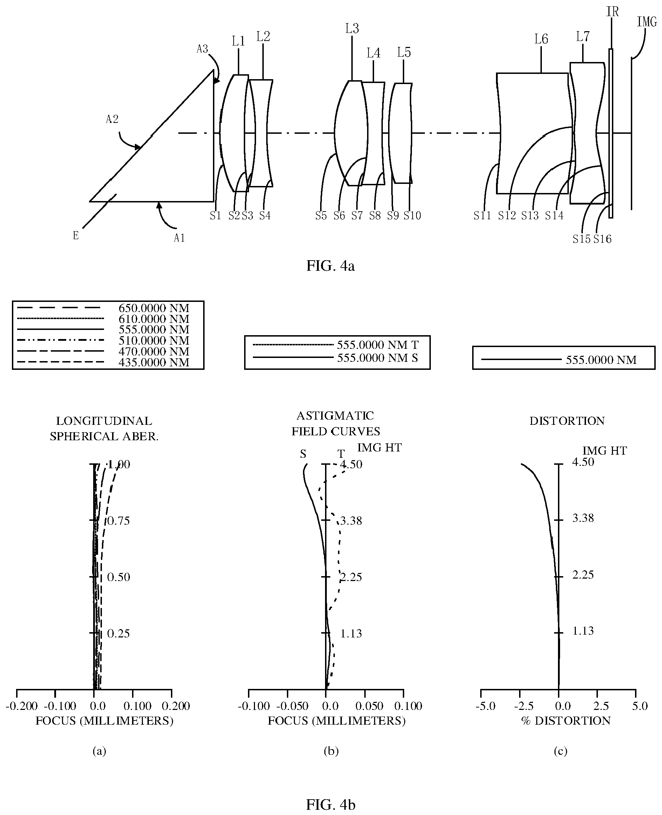

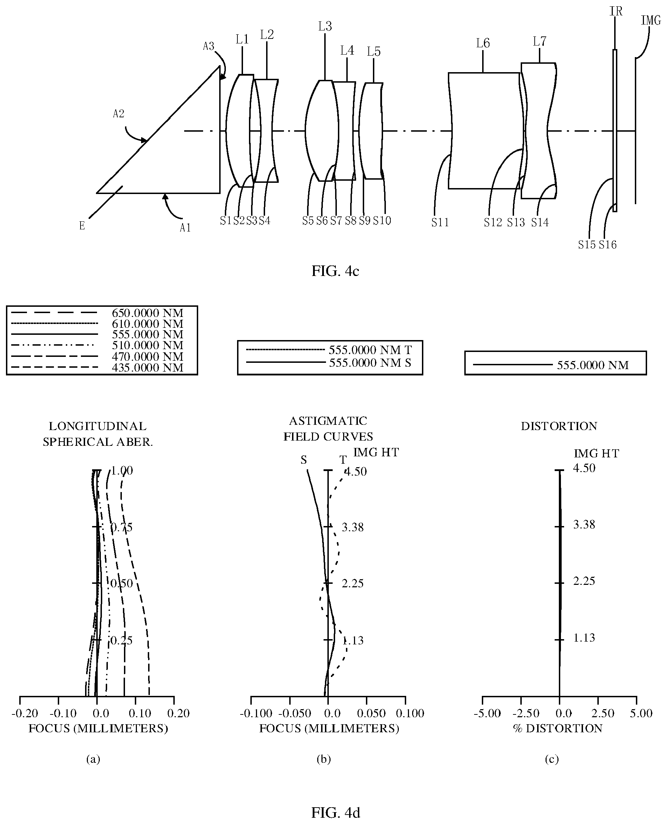

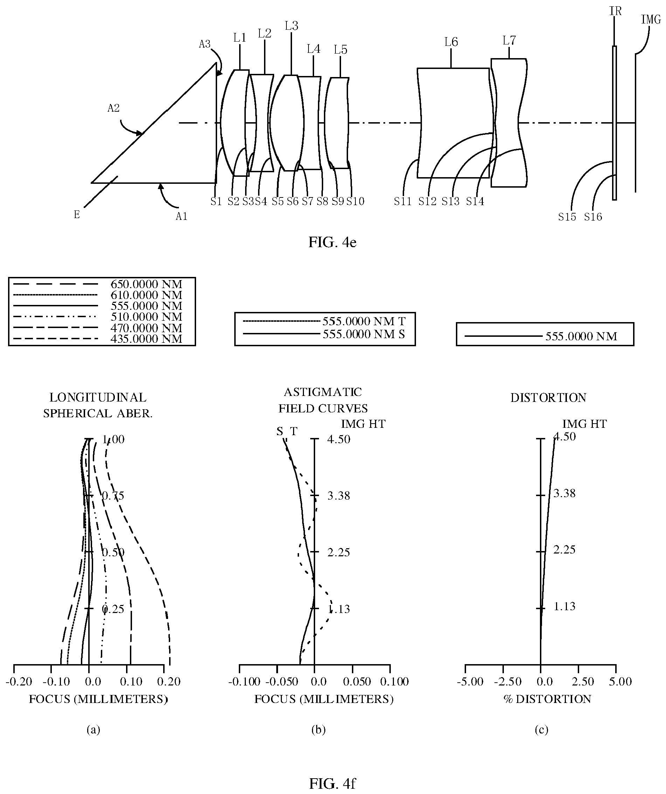

Referring to FIG. 4a to FIG. 4f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 which is convex near the optical axis and an image-side surface S2 which is concave near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 and an image-side surface S8 which are concave near the optical axis.

The fifth lens L5 has an object-side surface S9 and an image-side surface S10 which are convex near the optical axis. The object-side surface S9 is convex near a periphery and the image-side surface S10 is concave near a periphery.

The sixth lens L6 has an object-side surface S11 and an image-side surface S12 which are concave near the optical axis. The object-side surface S11 is convex near a periphery and the image-side surface S12 is concave near a periphery.

The seventh lens L7 has an object-side surface S13 which is convex near the optical axis and an image-side surface S14 which is concave near the optical axis. The object-side surface S13 is concave near a periphery and the image-side surface S14 is convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Other structures of the fourth implementation are the same of that of the first implementation, and reference may be made to the above.

Table 4a and Table 4b illustrate characteristics of the optical system of this implementation. A reference wavelength of the focal length of the lens is 555nm. A refractive index and Abbe number of the lens are obtained using visible light with a reference wavelength of 587.6nm. The units of Y radius, thickness, and effective focal length are all millimeters (mm). Other parameters have the same meaning as the parameters of the first implementation.

Table 4a

| Fourth Implementation | | | | | | | | |
|---|---|---|---|---|---|---|---|---|
| *f*=13.117mm, 18.121mm, 23.039mm; *FNO*=2.471, 3.127, 3.627; *FOV*=38.724deg, 27.815deg, 21.803deg; *TTL*=24.999 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 9.0433 | 1.4722 | plastic | 1.588 | 28.325 | 21.132 |
| S2 | | aspheric | 31.2937 | 0.6826 | | | | |
| S3 | L2 | spheric | -13.7629 | 0.6966 | glass | 1.744 | 44.903 | -9.150 |
| S4 | | spheric | 13.7629 | D1 | | | | |
| S5 | L3 | spheric | 6.0100 | 2.0350 | glass | 1.665 | 54.657 | 6.371 |
| S6 | | spheric | -12.3914 | 0.0050 | | | | |
| S7 | L4 | spheric | -12.3914 | 0.8735 | glass | 1.859 | 29.997 | -10.031 |
| S8 | | spheric | 29.1854 | 0.3785 | | | | |
| S9 | L5 | aspheric | 14.2495 | 1.4120 | plastic | 1.544 | 56.114 | 15.277 |
| S10 | | aspheric | -19.2535 | D2 | | | | |
| S11 | L6 | aspheric | -15.1485 | 4.3567 | plastic | 1.671 | 19.244 | -16.243 |
| S12 | | aspheric | 43.4201 | 0.1216 | | | | |
| S13 | L7 | aspheric | 4.3337 | 1.3467 | plastic | 1.544 | 56.114 | 2166.908 |
| S14 | | aspheric | 3.8734 | D3 | | | | |
| S15 | Filter IR | spheric | infinity | 0.2100 | glass | 1.517 | 64.166 | |
| S16 | | spheric | infinity | 1.1594 | | | | |
| IMG | Imaging surface | spheric | infinity | 0.0000 | | | | |

Table 4b

| Variable distance | D1 | D2 | D3 |
|---|---|---|---|
| Short focal length end | 4.09 | 5.384214269 | 0.774625052 |
| medium focal length end | 2 | 4.25 | 4 |
| long focal length end | 0.133794735 | 4.4 | 5.715205265 |

In Table 4a, *f* represents an effective focal length of the optical system. *FNO* represents an F-number of the optical system. *FOV* represents the maximum angle of view of the optical system. *TTL* represents a distance from the object-side surface of the first lens to the imaging surface of the optical system on the optical axis. D1 represents a distance from the image-side surface S4 of the second lens to the object-side surface S5 of the third lens on the optical axis. D2 represents a distance from the image-side surface S10 of the fifth lens to the object-side surface S11 of the sixth lens on the optical axis. D3 represents a distance from the image-side surface S14 of the seventh lens to the object-side surface S15 of the IR filter on the optical axis. Table 4b illustrates values of D1, D2, and D3 when the optical system is at the short focal length end, medium focal length end, and long focal length end.

When the optical system is at the short focal length end, *fd*=13.117mm, *FNO*=2.471, *FOV*=38.724°. When the optical system is at the medium focal length end, *fc*=18.121mm, *FNO*=3.127, *FOV*=27.815°. When the optical system is at the long focal length end, *fz*=23.039mm, *FNO*=3.627, FOV=21.803°.

Table 4c illustrates high-order term coefficients which can be used for the aspheric surfaces in this implementation. Surface profiles of respective aspheric surfaces can be limited by the expression given in the first implementation.

Table 4c

| Number | k | A4 | A6 | A8 | A10 |
|---|---|---|---|---|---|
| S1 | -1.636E+00 | 7.006E-04 | -5.683E-06 | 6.608E-06 | -5.504E-07 |
| S2 | -9.672E+00 | 3.636E-04 | -1.146E-05 | 9.581E-06 | -9.399E-07 |
| S9 | -2.693E+01 | 1.196E-03 | 9.616E-06 | 1.041E-05 | -2.817E-07 |
| S10 | -5.510E+00 | 1.590E-03 | 8.269E-05 | 1.797E-05 | -1.577E-06 |
| S11 | 1.267E+01 | 1.907E-03 | -1.676E-04 | 6.284E-05 | -1.427E-05 |
| S12 | -9.800E+01 | -3.841E-02 | 1.666E-02 | -4.619E-03 | 8.445E-04 |
| S13 | -6.782E+00 | -5.314E-02 | 1.944E-02 | -5.045E-03 | 8.800E-04 |
| S14 | -3.255E+00 | -1.379E-02 | 2.198E-03 | -2.859E-04 | 2.886E-05 |
| Number | A12 | A14 | A16 | A18 | A20 |
| S1 | 2.586E-08 | 0.000E+00 | 0.000E+00 | 0.000E+00 | 0.000E+00 |
| S2 | 4.929E-08 | 0.000E+00 | 0.000E+00 | 0.000E+00 | 0.000E+00 |
| S9 | 1.738E-08 | 0.000E+00 | 0.000E+00 | 0.000E+00 | 0.000E+00 |
| S10 | 1.398E-07 | 0.000E+00 | 0.000E+00 | 0.000E+00 | 0.000E+00 |
| S11 | 2.087E-06 | -1.815E-07 | 8.544E-09 | -1.637E-10 | 0.000E+00 |
| S12 | -9.906E-05 | 7.138E-06 | -2.862E-07 | 4.869E-09 | 0.000E+00 |
| S13 | -9.881E-05 | 6.801E-06 | -2.593E-07 | 4.166E-09 | 0.000E+00 |
| S14 | -2.095E-06 | 9.969E-08 | -2.727E-09 | 3.140E-11 | 0.000E+00 |

FIG. 4b, FIG. 4d, and FIG. 4f illustrate longitudinal spherical aberration curves, astigmatic field curves, and distortion curves for the optical system of this implementation. The longitudinal spherical aberration curve represents focus deviation of lights of different wavelengths after passing through lenses in the optical system. The astigmatic field curve represents sagittal field curvature and tangential field curvature. The distortion curve represents distortion values corresponding to different angles of view. As can be seen from aberration figures in FIG. 4b, FIG. 4d, and FIG. 4f, the longitudinal spherical aberration, the astigmatism, and the distortion of the optical system are well controlled, so that the optical system of this implementation has good image quality.

Fifth implementation

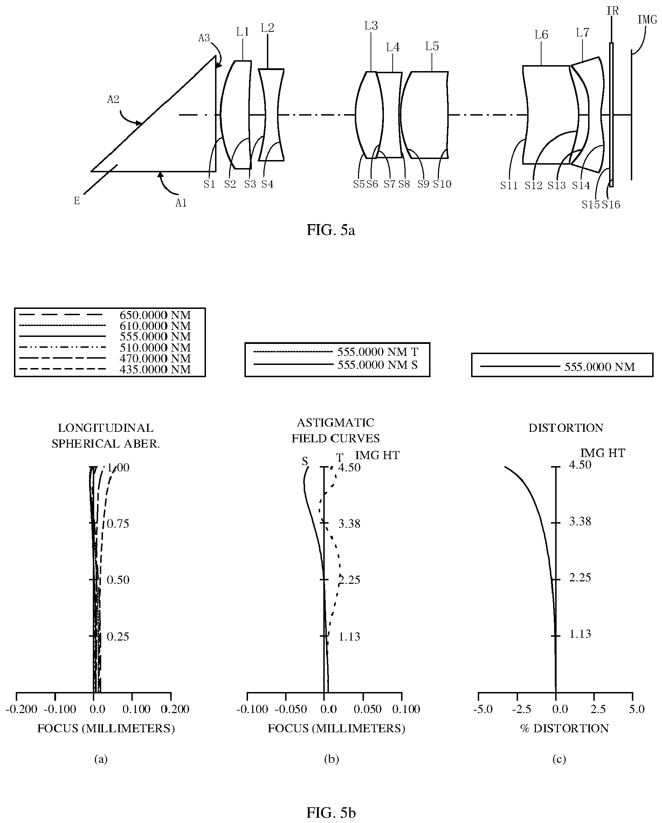

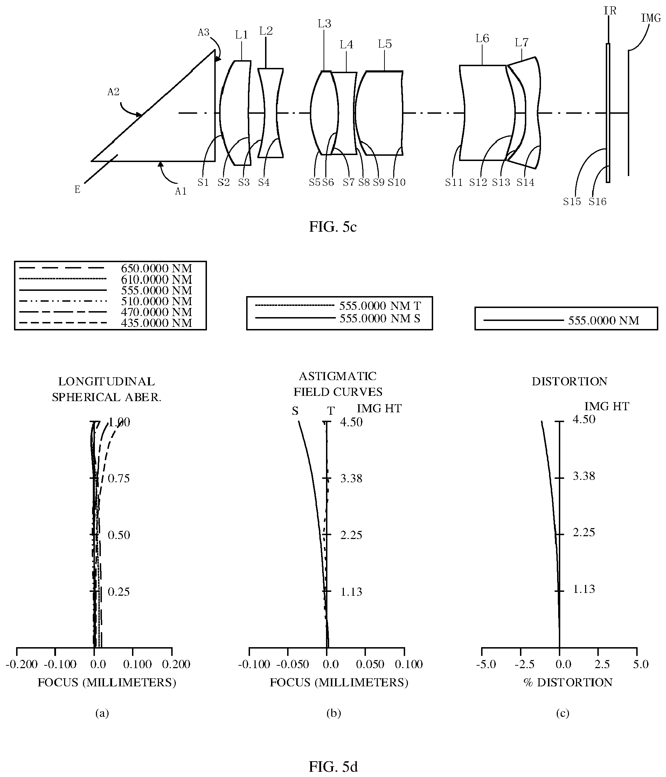

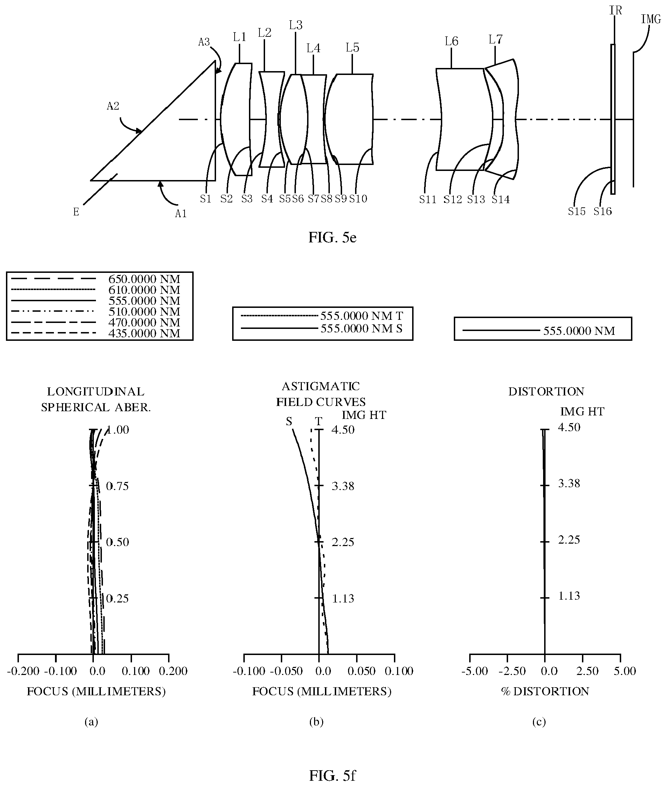

Referring to FIG. 5a to FIG. 5f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 which is convex near the optical axis and an image-side surface S2 which is concave near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 and an image-side surface S8 which are concave near the optical axis.

The fifth lens L5 has an object-side surface S9 and an image-side surface S10 which are convex near the optical axis. The object-side surface S9 is convex near a periphery and the image-side surface S10 is concave near a periphery.

The sixth lens L6 has an object-side surface S11 which is concave near the optical axis and an image-side surface S12 which is convex near the optical axis. The object-side surface S11 is convex near a periphery and the image-side surface S12 is concave near a periphery.

The seventh lens L7 has an object-side surface S13 which is convex near the optical axis and an image-side surface S14 which is concave near the optical axis. The object-side surface S13 and the image-side surface S14 are convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Other structures of the fifth implementation are the same of that of the first implementation, and reference may be made to the above.

Table 5a and Table 5b illustrate characteristics of the optical system of this implementation. A reference wavelength of the focal length of the lens is 555nm. A refractive index and Abbe number of the lens are obtained using visible light with a reference wavelength of 587.6nm. The units of Y radius, thickness, and effective focal length are all millimeters (mm). Other parameters have the same meaning as the parameters of the first implementation.

Table 5a

| Fifth implementation | | | | | | | | |
|---|---|---|---|---|---|---|---|---|
| f=12.109mm, 18.591mm, 24.311mm; FNO=2.373, 3.193, 3.74; FOV=42.096deg, 27.537deg, 21.035deg; TTL=25.5 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 9.1541 | 1.7727 | plastic | 1.588 | 28.325 | 18.801 |
| S2 | | aspheric | 49.6285 | 1.0262 | | | | |
| S3 | L2 | spheric | -12.1644 | 0.7511 | glass | 1.744 | 44.903 | -8.069 |
| S4 | | spheric | 12.1644 | D1 | | | | |
| S5 | L3 | spheric | 6.7566 | 1.7339 | glass | 1.665 | 54.657 | 6.393 |
| S6 | | spheric | -10.2753 | 0.0050 | | | | |
| S7 | L4 | spheric | -10.2753 | 0.9642 | glass | 1.859 | 29.997 | -8.158 |
| S8 | | spheric | 22.9735 | 0.1000 | | | | |

(continued)

| Fifth implementation | | | | | | | | |
|---|---|---|---|---|---|---|---|---|
| f=12.109mm, 18.591mm, 24.311mm; FNO=2.373, 3.193, 3.74; FOV=42.096deg, 27.537deg, 21.035deg; TTL=25.5 | | | | | | | | |
| Surface number | Surface name | Surface type | Y radius | Thickness | Material | Refractive index | Abbe number | Focal length |
| Object surface | Object surface | spheric | infinity | infinity | | | | |
| S9 | L5 | aspheric | 7.2875 | 2.9526 | plastic | 1.544 | 56.114 | 10.181 |
| S10 | | aspheric | -19.7942 | D2 | | | | |
| S11 | L6 | aspheric | -9.9404 | 3.1523 | plastic | 1.671 | 19.244 | 28.440 |
| S12 | | aspheric | -7.3697 | 0.6363 | | | | |
| S13 | L7 | aspheric | 46.8015 | 0.7603 | plastic | 1.544 | 56.114 | -9.346 |
| S14 | | aspheric | 4.5604 | D3 | | | | |
| S15 | Filter IR | spheric | infinity | 0.2100 | glass | 1.517 | 64.166 | |
| S16 | | spheric | infinity | 1.1594 | | | | |
| IMG | Imaging surface | spheric | infinity | 0.0000 | | | | |

Table 5b

| Variable distance | D1 | D2 | D3 |
|---|---|---|---|
| Short focal length end | 4.81 | 4.940182184 | 0.526305107 |
| medium focal length end | 2.1 | 3.873076907 | 4.301863654 |
| long focal length end | 0.1 | 4.253717996 | 5.922222565 |

In Table 5a, *f* represents an effective focal length of the optical system. *FNO* represents an F-number of the optical system. *FOV* represents the maximum angle of view of the optical system. *TTL* represents a distance from the object-side surface of the first lens to the imaging surface of the optical system on the optical axis. D1 represents a distance from the image-side surface S4 of the second lens to the object-side surface S5 of the third lens on the optical axis. D2 represents a distance from the image-side surface S10 of the fifth lens to the object-side surface S 11 of the sixth lens on the optical axis. D3 represents a distance from the image-side surface S14 of the seventh lens to the object-side surface S15 of the IR filter on the optical axis. Table 5b illustrates values of D1, D2, and D3 when the optical system is at the short focal length end, medium focal length end, and long focal length end.

When the optical system is at the short focal length end, *fd*=12.109mm, *FNO*=2.373, *FOV*=42.096°. When the optical system is at the medium focal length end, *fc*=18.591mm, *FNO*=3.193, *FOV*=27.537°. When the optical system is at the long focal length end, *fz*=24.311mm, *FNO*=3.74, *FOV*=21.035°.

Table 5c illustrates high-order term coefficients which can be used for the aspheric surfaces in this implementation. Surface profiles of respective aspheric surfaces can be limited by the expression given in the first implementation.

Table 5c

| Number | k | A4 | A6 | A8 | A10 |
|---|---|---|---|---|---|
| S1 | -2.506E+00 | 5.920E-04 | -4.154E-06 | 2.713E-06 | -1.911E-07 |
| S2 | -2.107E+01 | -5.553E-05 | 2.509E-07 | 2.575E-06 | -2.065E-07 |
| S9 | -8.829E+00 | 2.873E-03 | -1.307E-04 | 1.293E-05 | -5.299E-07 |
| S10 | -5.007E+01 | 1.122E-03 | 9.996E-05 | 3.473E-06 | -2.696E-07 |
| S11 | 4.895E+00 | 2.731E-03 | -1.012E-04 | 2.353E-05 | -3.045E-06 |

(continued)

| Number | k | A4 | A6 | A8 | A10 |
|---|---|---|---|---|---|
| S12 | 4.284E-02 | -4.141E-04 | 9.857E-04 | -3.215E-04 | 6.899E-05 |
| S13 | 1.362E+01 | -3.105E-02 | 6.921E-03 | -1.468E-03 | 2.469E-04 |
| S14 | -1.478E+01 | -1.430E-02 | 2.680E-03 | -4.235E-04 | 5.042E-05 |
| Number | A12 | A14 | A16 | A18 | A20 |
| S1 | 8.058E-09 | 0.000E+00 | 0.000E+00 | 0.000E+00 | 0.000E+00 |
| S2 | 1.046E-08 | 0.000E+00 | 0.000E+00 | 0.000E+00 | 0.000E+00 |
| S9 | 1.446E-08 | 0.000E+00 | 0.000E+00 | 0.000E+00 | 0.000E+00 |
| S10 | 4.958E-08 | 0.000E+00 | 0.000E+00 | 0.000E+00 | 0.000E+00 |
| S11 | 3.194E-07 | -1.230E-08 | -2.015E-10 | 1.933E-11 | 0.000E+00 |
| S12 | -9.848E-06 | 8.920E-07 | -4.529E-08 | 9.859E-10 | 0.000E+00 |
| S13 | -3.025E-05 | 2.478E-06 | -1.180E-07 | 2.427E-09 | 0.000E+00 |
| S14 | -4.213E-06 | 2.319E-07 | -7.506E-09 | 1.063E-10 | 0.000E+00 |

FIG. 5b, FIG. 5d, and FIG. 5f illustrate longitudinal spherical aberration curves, astigmatic field curves, and distortion curves for the optical system of this implementation. The longitudinal spherical aberration curve represents focus deviation of lights of different wavelengths after passing through lenses in the optical system. The astigmatic field curve represents sagittal field curvature and tangential field curvature. The distortion curve represents distortion values corresponding to different angles of view. As can be seen from aberration figures in FIG. 5b, FIG. 5d, and FIG. 5f, the longitudinal spherical aberration, the astigmatism, and the distortion of the optical system are well controlled, so that the optical system of this implementation has good image quality.

Sixth implementation

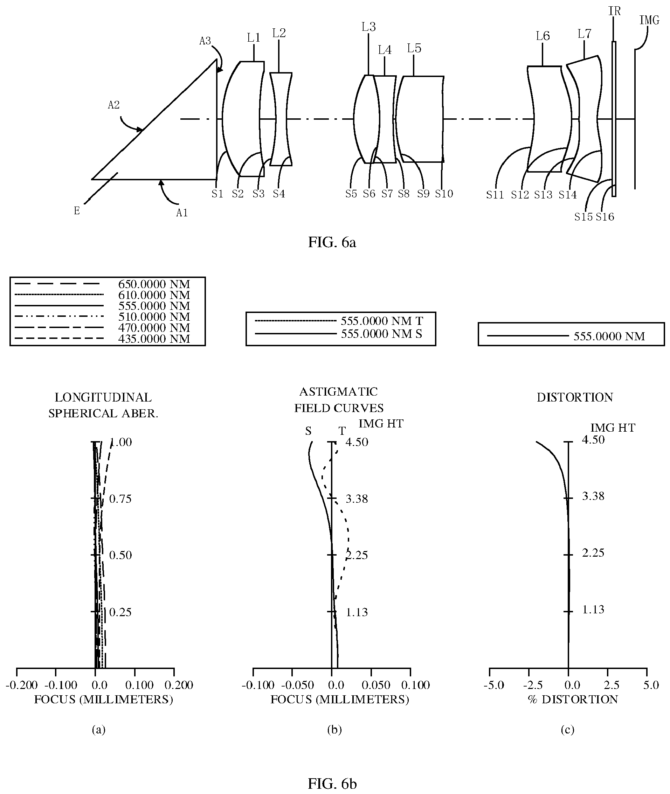

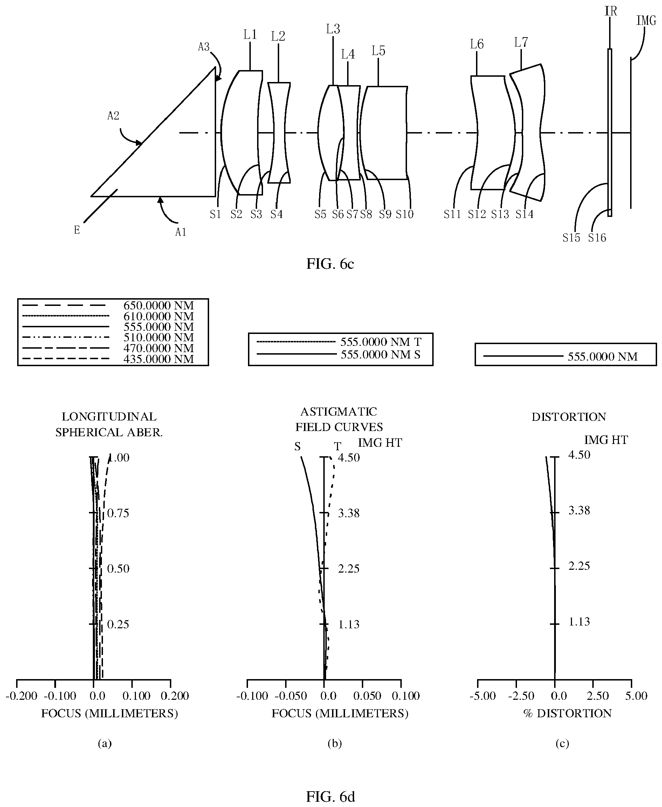

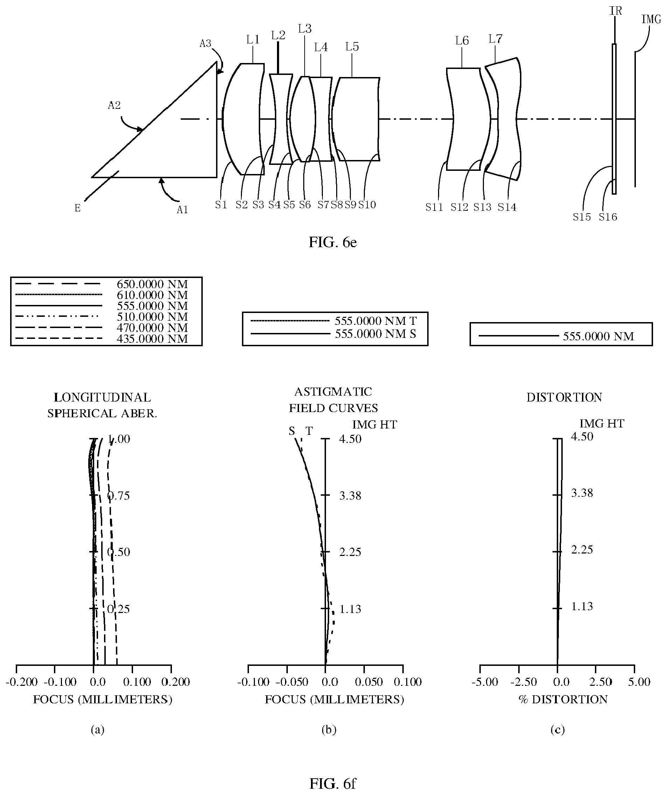

Referring to FIG. 6a to FIG. 6f, an optical system of this implementation includes sequentially from an object side to an image side along an optical axis: a first lens L1 with a positive refractive power, a second lens L2 with a negative refractive power, a third lens L3 with a positive refractive power, a fourth lens L4 with a negative refractive power, a fifth lens L5 with a positive refractive power, a sixth lens L6 with a positive refractive power, and a seventh lens L7 with a negative refractive power.

The first lens L1 has an object-side surface S1 which is convex near the optical axis and an image-side surface S2 which is concave near the optical axis. The object-side surface S1 is convex near a periphery and the image-side surface S2 is concave near a periphery.

The second lens L2 has an object-side surface S3 and an image-side surface S4 which are concave near the optical axis.

The third lens L3 has an object-side surface S5 and an image-side surface S6 which are convex near the optical axis.

The fourth lens L4 has an object-side surface S7 and an image-side surface S8 which are concave near the optical axis.

The fifth lens L5 has an object-side surface S9 and an image-side surface S10 which are convex near the optical axis. The object-side surface S9 is convex near a periphery and the image-side surface S10 is concave near a periphery.

The sixth lens L6 has an object-side surface S11 which is concave near the optical axis and an image-side surface S12 which is convex near the optical axis. The object-side surface S11 is convex near a periphery and the image-side surface S12 is concave near a periphery.

The seventh lens L7 has an object-side surface S13 which is convex near the optical axis and an image-side surface S14 which is concave near the optical axis. The object-side surface S13 and the image-side surface S14 are convex near a periphery.

The optical system are switchable among a long focal length end, a medium focal length end, and a short focal length end. The first lens and the second lens are fixed. The third to seventh lenses are fixed relative to one another, and the third to seventh lenses are movable along the optical axis relative to the first lens and the second lens. When the long focal length end, the medium focal length end, and the short focal length end are switched in sequence, a distance between the second lens and the third lens increases in sequence.

Other structures of the sixth implementation are the same of that of the first implementation, and reference may be made to the above.

Table 6a and Table 6b illustrate characteristics of the optical system of this implementation. A reference wavelength of the focal length of the lens is 555nm. A refractive index and Abbe number of the lens are obtained using visible light with a reference wavelength of 587.6nm. The units of Y radius, thickness, and effective focal length are all millimeters (mm). Other parameters have the same meaning as the parameters of the first implementation.

Table 6a

| Sixth implementation | | | | | | | | |
|---|---|---|---|---|---|---|---|---|
| *f*=13.494mm, 18.431mm, 23.421mm; *FNO*=2.569, 3.185, 3.677; *FOV*=37.645deg, 27.602deg, 21.69deg; *TTL*=24.5 | | | | | | | | |
| Surface number | Surface name | Surface type | Y radius | Thickness | Material | Refractive index | Abbe number | Focal length |
| Object surface | Object surface | spheric | infinity | infinity | | | | |
| S1 | L1 | aspheric | 7.8779 | 2.1987 | plastic | 1.588 | 28.325 | 18.496 |
| S2 | | aspheric | 25.6866 | 0.9820 | | | | |
| S3 | L2 | spheric | -12.6792 | 0.6266 | glass | 1.783 | 36.153 | -8.010 |
| S4 | | spheric | 12.6792 | D1 | | | | |
| S5 | L3 | spheric | 6.2999 | 1.5294 | glass | 1.734 | 51.470 | 5.626 |
| S6 | | spheric | -10.7523 | 0.0050 | | | | |
| S7 | L4 | spheric | -10.7523 | 0.8057 | glass | 1.903 | 31.005 | -7.933 |
| S8 | | spheric | 22.2039 | 0.1655 | | | | |
| S9 | L5 | aspheric | 9.1232 | 2.7805 | plastic | 1.544 | 56.114 | 13.417 |
| S10 | | aspheric | -32.6113 | D2 | | | | |
| S11 | L6 | aspheric | -7.8211 | 2.2357 | plastic | 1.671 | 19.244 | 37.196 |
| S12 | | aspheric | -6.6396 | 0.4397 | | | | |
| S13 | L7 | aspheric | 11.7956 | 1.0654 | plastic | 1.544 | 56.114 | -12.083 |
| S14 | | aspheric | 4.0872 | D3 | | | | |
| S15 | Filter IR | spheric | infinity | 0.2100 | glass | 1.517 | 64.166 | |
| S16 | | spheric | infinity | 1.1594 | | | | |
| IMG | Imaging surface | spheric | infinity | 0.0000 | | | | |

Table 6b

| Variable distance | D1 | D2 | D3 |
|---|---|---|---|
| Short focal length end | 4 | 5.423372323 | 0.873108987 |
| medium focal length end | 2 | 4.25 | 4.04748131 |
| long focal length end | 0.19648131 | 4.4 | 5.7 |

In Table 6a, *f* represents an effective focal length of the optical system. *FNO* represents an F-number of the optical system. *FOV* represents the maximum angle of view of the optical system. *TTL* represents a distance from the object-side surface of the first lens to the imaging surface of the optical system on the optical axis. In Table 6b, D1 represents a first lens group, D2 represents a second lens group, and D3 represents a third lens group.

When the optical system is at the short focal length end, *fd*=13.494mm, *FNO*=2.569, FOV=37.645°. When the optical system is at the medium focal length end, *fc*=18.431mm, *FNO*=3.185, FOV=27.602°. When the optical system is at the long focal length end, *fz*=23.421mm, *FNO*=3.677, FOV=21.69°.

Table 6c illustrates high-order term coefficients which can be used for the aspheric surfaces in this implementation. Surface profiles of respective aspheric surfaces can be limited by the expression given in the first implementation.

Table 6c

| Number | k | A4 | A6 | A8 | A10 |
|---|---|---|---|---|---|
| S1 | -1.378E+00 | 7.669E-04 | -1.662E-07 | 4.499E-06 | -3.309E-07 |
| S2 | 8.661E+00 | 3.301E-04 | -3.790E-06 | 8.371E-06 | -8.394E-07 |
| S9 | -1.357E+01 | 2.311E-03 | -1.083E-04 | 1.150E-05 | -5.299E-07 |
| S10 | -9.800E+01 | 1.691E-03 | 8.516E-05 | 5.436E-06 | -3.202E-07 |
| S11 | 2.418E+00 | 3.771E-03 | -3.313E-04 | 1.074E-04 | -2.536E-05 |
| S12 | 2.539E-01 | -3.866E-03 | 2.409E-03 | -7.063E-04 | 1.471E-04 |
| S13 | -9.533E+01 | -2.270E-02 | 4.175E-03 | -7.763E-04 | 1.256E-04 |
| S14 | -9.737E+00 | -1.090E-02 | 1.465E-03 | -1.555E-04 | 1.101E-05 |
| Number | A12 | A14 | A16 | A18 | A20 |
| S1 | 1.419E-08 | 0.000E+00 | 0.000E+00 | 0.000E+00 | 0.000E+00 |
| S2 | 4.587E-08 | 0.000E+00 | 0.000E+00 | 0.000E+00 | 0.000E+00 |
| S9 | 1.519E-08 | 0.000E+00 | 0.000E+00 | 0.000E+00 | 0.000E+00 |
| S10 | 5.807E-08 | 0.000E+00 | 0.000E+00 | 0.000E+00 | 0.000E+00 |
| S11 | 4.294E-06 | -4.309E-07 | 2.334E-08 | -5.245E-10 | 0.000E+00 |
| S12 | -2.086E-05 | 1.910E-06 | -9.969E-08 | 2.230E-09 | 0.000E+00 |
| S13 | -1.603E-05 | 1.457E-06 | -7.849E-08 | 1.805E-09 | 0.000E+00 |
| S14 | -4.336E-07 | 8.235E-09 | -1.712E-10 | 4.974E-12 | 0.000E+00 |

FIG. 6b, FIG. 6d, and FIG. 6f illustrate longitudinal spherical aberration curves, astigmatic field curves, and distortion curves for the optical system of this implementation. The longitudinal spherical aberration curve represents focus deviation of lights of different wavelengths after passing through lenses in the optical system. The astigmatic field curve represents sagittal field curvature and tangential field curvature. The distortion curve represents distortion values corresponding to different angles of view. As can be seen from aberration figures in FIG. 6b, FIG. 6d, and FIG. 6f, the longitudinal spherical aberration, the astigmatism, and the distortion of the optical system are well controlled, so that the optical system of this implementation has good image quality.

Table 7 illustrates values of *fcj/fdj, fcj/F67, f5/r51, f4/f3, r32/f345, r61/r72, (n2+n3+n4)/n3, d3dj/d1cj, TTL/ImgH, fdj/EPDdj, sd11dj*/tan(*Hfovdj*), and *TTL/ctg3* in optical systems of the first to sixth implementations.

Table 7

| Expression | *fcj/fdj* | *fcj/F67* | *f5/r51* | *f4/f3* | *r32/f345* | *r61/r72* |
|---|---|---|---|---|---|---|
| First implementation | 1.714 | -1.905 | 1.23 | -1.29 | -1.03 | -1.23 |
| Second implementation | 1.720 | -1.687 | 1.53 | -1.41 | -1.17 | -1.98 |
| Third implementation | 1.762 | -1.523 | 1.89 | -1.52 | -0.95 | -1.99 |
| Fourth implementation | 1.756 | -1.580 | 1.07 | -1.57 | -1.52 | -3.91 |
| Fifth implementation | 2.008 | -1.969 | 1.40 | -1.28 | -1.34 | -2.18 |
| Sixth implementation | 1.736 | -1.450 | 1.47 | -1.41 | -1.38 | -1.91 |

(continued)

| Expression | (n2+n3+n4)/n3 | d3dj/d1cj | TTL/ImgH | fdj/EPDdj | sd11djltan(Hfovdj) | TTL/ctg3 |
|---|---|---|---|---|---|---|
| First implementation | 3.164 | 9.16 | 5.56 | 2.81 | 9.188 | 5.46 |
| Second implementation | 3.164 | 7.00 | 5.56 | 2.81 | 11.009 | 5.35 |
| Third implementation | 3.164 | 7.04 | 5.56 | 2.49 | 9.916 | 6.11 |
| Fourth implementation | 3.164 | 5.79 | 5.56 | 2.47 | 9.861 | 4.29 |
| Fifth implementation | 3.164 | 5.26 | 5.67 | 2.37 | 9.742 | 5.61 |
| Sixth implementation | 3.126 | 4.44 | 5.44 | 2.57 | 10.853 | 6.55 |

As illustrated in Table 7, in the first to sixth implementations, the optical systems satisfy the following expressions: $2.01 > fcj/fdj > 1.7$, $-2 < fcj/F67 < -1.4$, $1 < f5/r51 < 2$, $-1.6 < f4/f3 < -1.2$, $-1.6 < r32/f345 < -0.9$, $-4 < r61/r72 < -1.2$, $(n2+n3+n4)/n3 > 3.1$, $4 < d3dj/d1cj < 10$, $5.4 < TTL/ImgH < 5.7$, $fdj/EPDdj < 2.9$, $sd11djltan(Hfovdj) < 12$, $4 < TTL/ctg3 < 7$.

The above disclosures are only some preferred implementations of the present disclosure, which of course cannot limit the scope of the rights of the present disclosure. Those of ordinary skill in the art can understand all or part of processes for implementing the above implementations. The equivalent changes made still belong to the scope covered by the present invention. The equivalent changes made according to the claims of the present disclosure still belong to the scope covered by the present disclosure.

**Claims**

1.   An optical system comprising sequentially, from an object side to an image side along an optical axis:

a first lens (L1) with a positive refractive power, the first lens having an object-side surface (S1) which is convex near the optical axis;
a second lens (L2) with a negative refractive power, the second lens having an object-side surface (S3) which is concave near the optical axis and an image-side surface (S4) which is concave near the optical axis;
a third lens (L3) with a positive refractive power, the third lens having an object-side surface (S5) which is convex near the optical axis and an image-side surface (S6) which is convex near the optical axis;
a fourth lens (L4) with a negative refractive power, the fourth lens having an object-side surface (S7) which is concave near the optical axis;
a fifth lens (L5) with a positive refractive power, the fifth lens having an object-side surface (S9) which is convex near the optical axis;
a sixth lens (L6) with a refractive power, the sixth lens having an object-side surface (S11) which is concave near the optical axis; and
a seventh lens (L7) with a refractive power, the seventh lens having an image-side surface (S14) which is concave near the optical axis, wherein
the first lens (L1) and the second lens (L2) are fixed relative to one another and constitute a first lens group, the first lens group is fixed, the third to fifth lenses are fixed relative to one another and constitute a second lens group, the sixth lens (L6) and the seventh lens (L7) are fixed relative to one another and constitute a third lens group, and the second lens group and the third lens group are movable along the optical axis to switch among a long focal length end, a medium focal length end, and a short focal length end in sequence, and wherein the optical system satisfies an expression:

$$-2 < fcj/F67 < -1.4,$$

wherein $fcj$ represents an effective focal length of the optical system at the long focal length end, and F67 represents an effective focal length of the third lens group.

2.   The optical system of claim 1, wherein the third lens (L3) is cemented with the fourth lens (L4) and the optical system satisfies an expression:

$$-1.6 < r32/f345 < -0.9 \text{ or } 1 < f5/r51 < 2,$$

wherein $r32$ represents a radius of curvature of the image-side surface (S6) of the third lens (L3) at the optical axis, f345 represents a combined effective focal length of the third to fifth lenses, $f5$ represents an effective focal length of the fifth lens (L5), and $r51$ represents a radius of curvature of the object-side surface (S9) of the fifth lens (L5) at the optical axis.

3. The optical system of claim 1, wherein the optical system satisfies an expression:

$$2.01 > fcj/fdj > 1.7,$$

wherein $fdj$ represents an effective focal length of the optical system at the short focal length end.

4. The optical system of claim 1, wherein the optical system satisfies an expression:

$$-1.6 < f4/f3 < -1.2,$$

wherein $f3$ represents an effective focal length of the third lens (L3) and $f4$ represents an effective focal length of the fourth lens (L4).

5. The optical system of claim 1, wherein the optical system satisfies an expression:

$$-4 < r61/r72 < -1.2,$$

wherein $r72$ represents a radius of curvature of the image-side surface (S14) of the seventh lens (L7) at the optical axis and $r61$ represents a radius of curvature of the object-side surface (S11) of the sixth lens (L6) at the optical axis.

6. The optical system of claim 1, wherein the optical system satisfies an expression:

$$4 < d3dj/d1cj < 10,$$

wherein $d3dj$ represents a distance on the optical axis from the image-side surface (S14) of the seventh lens (L7) to an object-side surface (S15) of an infrared cut-off filter when the optical system is at the short focal length end, and $d1cj$ represents a distance on the optical axis from the image-side surface (S4) of the second lens (L2) to the object-side surface (S5) of the third lens (L3) when the optical system is at the long focal length end.

7. The optical system of claim 1, wherein the optical system satisfies an expression:

$$fdj/EPDdj < 2.9,$$

wherein $fdj$ represents an effective focal length of the optical system at the short focal length end, and $EPDdj$ represents an entrance pupil diameter of the optical system at the short focal length end.

8. The optical system of claim 1, wherein the optical system satisfies an expression:

$$sd11dj/\tan(Hfovdj) < 12,$$

wherein $sd11dj$ represents half of a maximum clear aperture of the object-side surface (S1) of the first lens (L1) when the optical system is at the short focal length end, and $Hfovdj$ represents half of an angle of view when the optical system is at the short focal length end.

9. The optical system of claim 1, wherein the optical system satisfies an expression:

$$4 < TTL/ctg3 < 7 \text{ or } 5.4 < TTL/ImgH < 5.7,$$

wherein *TTL* represents a distance on the optical axis from the object-side surface (S1) of the first lens (L1) to an imaging surface of the optical system, *ctg3* represents a distance on the optical axis from the object-side surface (S11) of the sixth lens (L6) to the image-side surface (S14) of the seventh lens (L7), and *ImgH* represents half of an image height corresponding to a maximum angle of view of the optical system.

10. A lens module, comprising a lens barrel, a photosensitive element, and the optical system of any of claims 1-9, wherein the first to seventh lenses of the optical system are installed inside the lens barrel, and the photosensitive element is disposed at the image side of the optical system.

11. An electronic device, comprising a housing and the lens module of claim 10, wherein the lens module is received in the housing.

**Amended claims in accordance with Rule 137(2) EPC.**

1. An optical system comprising sequentially, from an object side to an image side along an optical axis:

a first lens (L1) with a positive refractive power, the first lens having an object-side surface (S1) which is convex near the optical axis;
a second lens (L2) with a negative refractive power, the second lens having an object-side surface (S3) which is concave near the optical axis and an image-side surface (S4) which is concave near the optical axis;
a third lens (L3) with a positive refractive power, the third lens having an object-side surface (S5) which is convex near the optical axis and an image-side surface (S6) which is convex near the optical axis;
a fourth lens (L4) with a negative refractive power, the fourth lens having an object-side surface (S7) which is concave near the optical axis;
a fifth lens (L5) with a positive refractive power, the fifth lens having an object-side surface (S9) which is convex near the optical axis;
a sixth lens (L6) with a refractive power, the sixth lens having an object-side surface (S11) which is concave near the optical axis; and
a seventh lens (L7) with a refractive power, the seventh lens having an image-side surface (S14) which is concave near the optical axis, wherein
the optical system comprises no more than three lens groups, wherein the first lens (L1) and the second lens (L2) are fixed relative to one another and constitute a first lens group, the first lens group is fixed and has a negative refractive power, the third to fifth lenses are fixed relative to one another and constitute a second lens group, the second lens group has a positive refractive power, the sixth lens (L6) and the seventh lens (L7) are fixed relative to one another and constitute a third lens group, the third lens group has a negative refractive power, and the second lens group and the third lens group are movable along the optical axis to switch among a long focal length end, a medium focal length end, and a short focal length end in sequence, and wherein the optical system satisfies an expression:

$$-2 < fcj/F67 < -1.4,$$

wherein *fcj* represents an effective focal length of the optical system at the long focal length end, and *F67* represents an effective focal length of the third lens group;
**characterized in that**:

the optical system satisfies an expression:

$$5.4 < TTL/ImgH < 5.7,$$

wherein *TTL* represents a distance on the optical axis from the object-side surface (S 1) of the first lens (L1) to an imaging surface of the optical system, and *ImgH* represents half of an image height corresponding to a maximum angle of view of the optical system.

2. The optical system of claim 1, wherein the third lens (L3) is cemented with the fourth lens (L4) and the optical system satisfies an expression:

$$-1.6 < r32/f345 < -0.9 \text{ or } 1 < f5/r51 < 2,$$

wherein *r32* represents a radius of curvature of the image-side surface (S6) of the third lens (L3) at the optical axis, j345 represents a combined effective focal length of the third to fifth lenses, f5 represents an effective focal length of the fifth lens (L5), and *r51* represents a radius of curvature of the object-side surface (S9) of the fifth lens (L5) at the optical axis.

3. The optical system of claim 1, wherein the optical system satisfies an expression:

$$2.01 > fcj/fdj > 1.7,$$

wherein *fdj* represents an effective focal length of the optical system at the short focal length end.

4. The optical system of claim 1, wherein the optical system satisfies an expression:

$$-1.6 < f4/f3 < -1.2,$$

wherein *f3* represents an effective focal length of the third lens (L3) and *f4* represents an effective focal length of the fourth lens (L4).

5. The optical system of claim 1, wherein the optical system satisfies an expression:

$$-4 < r61/r72 < -1.2,$$

wherein r72 represents a radius of curvature of the image-side surface (S14) of the seventh lens (L7) at the optical axis and *r61* represents a radius of curvature of the object-side surface (S11) of the sixth lens (L6) at the optical axis.

6. The optical system of claim 1, wherein the optical system further comprises an infrared cut-off filter, and the optical system satisfies an expression:

$$4 < d3dj/d1cj < 10,$$

wherein *d3dj* represents a distance on the optical axis from the image-side surface (S 14) of the seventh lens (L7) to an object-side surface (S15) of the infrared cut-off filter when the optical system is at the short focal length end, and *d1cj* represents a distance on the optical axis from the image-side surface (S4) of the second lens (L2) to the object-side surface (S5) of the third lens (L3) when the optical system is at the long focal length end.

7. The optical system of claim 1, wherein the optical system satisfies an expression:

$$fdj/EPDdj < 2.9,$$

wherein *fdj* represents an effective focal length of the optical system at the short focal length end, and *EPDdj* represents an entrance pupil diameter of the optical system at the short focal length end.

8. The optical system of claim 1, wherein the optical system satisfies an expression:

$$sd11dj/\tan(Hfovdj)<12,$$

wherein *sd11dj* represents half of a maximum clear aperture of the object-side surface (S1) of the first lens (L1) when the optical system is at the short focal length end, and *Hfovdj* represents half of an angle of view when the optical system is at the short focal length end.

9. The optical system of claim 1, wherein the optical system satisfies an expression:

$$4<TTL/ctg3<7,$$

wherein *ctg3* represents a distance on the optical axis from the object-side surface (S11) of the sixth lens (L6) to the image-side surface (S14) of the seventh lens (L7).

10. A lens module, comprising a lens barrel, a photosensitive element, and the optical system of any of claims 1-9, wherein the first to seventh lenses of the optical system are installed inside the lens barrel, and the photosensitive element is disposed at the image side of the optical system.

11. An electronic device, comprising a housing and the lens module of claim 10, wherein the lens module is received in the housing.

FIG. 1a

| | 650.0000 NM |
|---|---|
| | 610.0000 NM |
| | 555.0000 NM |
| | 510.0000 NM |
| | 470.0000 NM |
| | 435.0000 NM |

| | 555.0000 NM T |
|---|---|
| | 555.0000 NM S |

| | 555.0000 NM |
|---|---|

LONGITUDINAL
SPHERICAL ABER.

ASTIGMATIC
FIELD CURVES

DISTORTION

FOCUS (MILLIMETERS)

FOCUS (MILLIMETERS)

% DISTORTION

(a)

(b)

(c)

FIG. 1b

FIG. 1c

LONGITUDINAL SPHERICAL ABER.

ASTIGMATIC FIELD CURVES

DISTORTION

(a)

(b)

(c)

FIG. 1d

FIG. 1e

LONGITUDINAL
SPHERICAL ABER.

ASTIGMATIC
FIELD CURVES

DISTORTION

(a)

(b)

(c)

FIG. 1f

FIG. 2a

FIG. 2b

FIG. 2c

| | |
|---|---|
| – – – – | 650.0000 NM |
| ·············· | 610.0000 NM |
| ———— | 555.0000 NM |
| –··—··—·· | 510.0000 NM |
| —·—·—· | 470.0000 NM |
| — — — | 435.0000 NM |

| | |
|---|---|
| ·············· | 555.0000 NM T |
| ———— | 555.0000 NM S |

| | |
|---|---|
| ———— | 555.0000 NM |

LONGITUDINAL
SPHERICAL ABER.

1.00
0.75
0.50
0.25

-0.200 -0.100 0.0 0.100 0.200
FOCUS (MILLIMETERS)

(a)

ASTIGMATIC
FIELD CURVES

IMG HT
4.50
3.38
2.25
1.13

-0.100 -0.050 0.0 0.050 0.100
FOCUS (MILLIMETERS)

(b)

DISTORTION

IMG HT
4.50
3.38
2.25
1.13

-5.00 -2.50 0.0 2.50 5.00
% DISTORTION

(c)

FIG.
2d

FIG. 2e

LONGITUDINAL
SPHERICAL ABER.

ASTIGMATIC
FIELD CURVES

DISTORTION

(a)

(b)

(c)

FIG. 2f

FIG. 3a

FIG. 3b

| | 650.0000 NM |
| --- | --- |
| | 610.0000 NM |
| | 555.0000 NM |
| | 510.0000 NM |
| | 470.0000 NM |
| | 435.0000 NM |

555.0000 NM T
555.0000 NM S

555.0000 NM

LONGITUDINAL
SPHERICAL ABER.

ASTIGMATIC
FIELD CURVES

DISTORTION

FOCUS (MILLIMETERS)

FOCUS (MILLIMETERS)

% DISTORTION

(a)

(b)

(c)

FIG. 3c

| | 650.0000 NM |
|---|---|
| | 610.0000 NM |
| | 555.0000 NM |
| | 510.0000 NM |
| | 470.0000 NM |
| | 435.0000 NM |

555.0000 NM T
555.0000 NM S

555.0000 NM

LONGITUDINAL
SPHERICAL ABER.

ASTIGMATIC
FIELD CURVES

DISTORTION

-0.200 -0.100 0.0 0.100 0.200
FOCUS (MILLIMETERS)

-0.100 -0.050 0.0 0.050 0.100
FOCUS (MILLIMETERS)

-5.00 -2.50 0.0 2.50 5.00
% DISTORTION

(a)

(b)

(c)

FIG. 3d

FIG. 3e

| | 650.0000 NM |
|---|---|
| | 610.0000 NM |
| | 555.0000 NM |
| | 510.0000 NM |
| | 470.0000 NM |
| | 435.0000 NM |

| | 555.0000 NM T |
|---|---|
| | 555.0000 NM S |

| | 555.0000 NM |
|---|---|

LONGITUDINAL
SPHERICAL ABER.

1.00

0.75

0.50

0.25

-0.200 -0.100 0.0 0.100 0.200
FOCUS (MILLIMETERS)

(a)

ASTIGMATIC
FIELD CURVES
IMG HT
T S 4.50

3.38

2.25

1.13

-0.100 -0.050 0.0 0.050 0.100
FOCUS (MILLIMETERS)

(b)

DISTORTION
IMG HT
4.50

3.38

2.25

1.13

-5.00 -2.50 0.0 2.50 5.00
% DISTORTION

(c)

FIG. 3f

FIG. 4a

650.0000 NM
610.0000 NM
555.0000 NM
510.0000 NM
470.0000 NM
435.0000 NM

555.0000 NM T
555.0000 NM S

555.0000 NM

LONGITUDINAL
SPHERICAL ABER.

ASTIGMATIC
FIELD CURVES

DISTORTION

FOCUS (MILLIMETERS)

FOCUS (MILLIMETERS)

% DISTORTION

(a)

(b)

(c)

FIG. 4b

FIG. 4c

| | |
|---|---|
| 650.0000 NM | |
| 610.0000 NM | |
| 555.0000 NM | |
| 510.0000 NM | |
| 470.0000 NM | |
| 435.0000 NM | |

555.0000 NM T
555.0000 NM S

555.0000 NM

LONGITUDINAL
SPHERICAL ABER.

ASTIGMATIC
FIELD CURVES

DISTORTION

IMG HT

IMG HT

-0.20  -0.10   0.0   0.10   0.20
FOCUS (MILLIMETERS)

(a)

-0.100 -0.050  0.0  0.050 0.100
FOCUS (MILLIMETERS)

(b)

-5.00  -2.50   0.0   2.50   5.00
% DISTORTION

(c)

FIG. 4d

FIG. 4e

| | |
|---|---|
| ― ― ― ― | 650.0000 NM |
| ················· | 610.0000 NM |
| ――――― | 555.0000 NM |
| ―··―··―··― | 510.0000 NM |
| ― ― ― ― | 470.0000 NM |
| ------------ | 435.0000 NM |

| | |
|---|---|
| ················· | 555.0000 NM T |
| ――――― | 555.0000 NM S |

| | |
|---|---|
| ――――― | 555.0000 NM |

LONGITUDINAL
SPHERICAL ABER.

ASTIGMATIC
FIELD CURVES

DISTORTION

FOCUS (MILLIMETERS)

FOCUS (MILLIMETERS)

% DISTORTION

(a)

(b)

(c)

FIG. 4f

FIG. 5a

| | |
|---|---|
| — — — — — | 650.0000 NM |
| ·············· | 610.0000 NM |
| ———— | 555.0000 NM |
| — ·· — ·· — ·· | 510.0000 NM |
| — — — — | 470.0000 NM |
| — — — — — — | 435.0000 NM |

| | |
|---|---|
| ·············· | 555.0000 NM T |
| ———— | 555.0000 NM S |

| | |
|---|---|
| ———— | 555.0000 NM |

LONGITUDINAL
SPHERICAL ABER.

ASTIGMATIC
FIELD CURVES

DISTORTION

FOCUS (MILLIMETERS)

FOCUS (MILLIMETERS)

% DISTORTION

(a)

(b)

(c)

FIG. 5b

FIG. 5c

| | | |
|---|---|---|
| 650.0000 NM | | |
| 610.0000 NM | | |
| 555.0000 NM | | |
| 510.0000 NM | | |
| 470.0000 NM | | |
| 435.0000 NM | | |

555.0000 NM T
555.0000 NM S

555.0000 NM

LONGITUDINAL
SPHERICAL ABER.

1.00

0.75

0.50

0.25

-0.200 -0.100 0.0 0.100 0.200
FOCUS (MILLIMETERS)

(a)

ASTIGMATIC
FIELD CURVES

S    T    IMG HT

4.50

3.38

2.25

1.13

-0.100 -0.050 0.0 0.050 0.100
FOCUS (MILLIMETERS)

(b)

DISTORTION

IMG HT

4.50

3.38

2.25

1.13

-5.0 -2.5 0.0 2.5 5.0
% DISTORTION

(c)

FIG. 5d

FIG. 5e

| | |
|---|---|
| — — — — | 650.0000 NM |
| ·············· | 610.0000 NM |
| ———— | 555.0000 NM |
| ·—·—·—·— | 510.0000 NM |
| — — — | 470.0000 NM |
| – – – – – | 435.0000 NM |

| | |
|---|---|
| ·············· | 555.0000 NM T |
| ———— | 555.0000 NM S |

| | |
|---|---|
| ———— | 555.0000 NM |

LONGITUDINAL
SPHERICAL ABER.

ASTIGMATIC
FIELD CURVES

DISTORTION

(a)

(b)

(c)

FIG. 5f

FIG. 6a

| | |
|---|---|
| — — — — | 650.0000 NM |
| ···················· | 610.0000 NM |
| ———————— | 555.0000 NM |
| —··—··—··—··· | 510.0000 NM |
| — — — — | 470.0000 NM |
| – – – – – – | 435.0000 NM |

| | |
|---|---|
| ·················· | 555.0000 NM T |
| ———————— | 555.0000 NM S |

| | |
|---|---|
| ———————— | 555.0000 NM |

LONGITUDINAL
SPHERICAL ABER.

ASTIGMATIC
FIELD CURVES

DISTORTION

(a)

(b)

(c)

FIG. 6b

FIG. 6c

| | | |
|---|---|---|
| | 650.0000 NM | |
| | 610.0000 NM | |
| | 555.0000 NM | |
| | 510.0000 NM | |
| | 470.0000 NM | |
| | 435.0000 NM | |

555.0000 NM T
555.0000 NM S

555.0000 NM

LONGITUDINAL
SPHERICAL ABER.

ASTIGMATIC
FIELD CURVES
S      T      IMG HT

DISTORTION
IMG HT

FOCUS (MILLIMETERS)

FOCUS (MILLIMETERS)

% DISTORTION

(a)

(b)

(c)

FIG. 6d

FIG. 6e

| | 650.0000 NM |
|---|---|
| | 610.0000 NM |
| | 555.0000 NM |
| | 510.0000 NM |
| | 470.0000 NM |
| | 435.0000 NM |

| | 555.0000 NM T |
|---|---|
| | 555.0000 NM S |

| | 555.0000 NM |
|---|---|

LONGITUDINAL
SPHERICAL ABER.

1.00

0.75

0.50

0.25

-0.200 -0.100 0.0 0.100 0.200
FOCUS (MILLIMETERS)

(a)

ASTIGMATIC
FIELD CURVES

IMG HT

S    T

4.50

3.38

2.25

1.13

-0.100 -0.050 0.0 0.050 0.100
FOCUS (MILLIMETERS)

(b)

DISTORTION

IMG HT

4.50

3.38

2.25

1.13

-5.00 -2.50 0.0 2.50 5.00
% DISTORTION

(c)

FIG. 6f

Europäisches
Patentamt
European
Patent Office
Office européen
des brevets

# EUROPEAN SEARCH REPORT

**Application Number**

EP 22 16 0503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 684 599 A (JIANGXI JINGCHAO OPTICAL CO LTD) 20 April 2021 (2021-04-20) * example 1 * | 1,3,7, 9-11 | INV. G02B15/14 |
| X | TW I 733 556 B (LARGAN PRECISION CO LTD [TW]) 11 July 2021 (2021-07-11) * example 2 * | 1-11 | |
| A | US 2021/063702 A1 (KIM HAG CHUL [KR] ET AL) 4 March 2021 (2021-03-04) * example 1 * | 1 | |
| A | CN 113 552 695 A (JIANGXI JINGCHAO OPTICAL CO LTD) 26 October 2021 (2021-10-26) * example 1 * | 1 | |

**TECHNICAL FIELDS SEARCHED (IPC)**

G02B

The present search report has been drawn up for all claims

| Place of search | Date of completion of the search | Examiner |
|---|---|---|
| Munich | 28 July 2022 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 0503

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2022

| Patent document cited in search report | | Publication date | Patent family member(s) | | Publication date |
|---|---|---|---|---|---|
| CN 112684599 | A | 20-04-2021 | NONE | | |
| TW I733556 | B | 11-07-2021 | CN | 114063268 A | 18-02-2022 |
| | | | US | 2022035132 A1 | 03-02-2022 |
| US 2021063702 | A1 | 04-03-2021 | CN | 112444948 A | 05-03-2021 |
| | | | CN | 214097941 U | 31-08-2021 |
| | | | KR | 20210027184 A | 10-03-2021 |
| | | | TW | 202109123 A | 01-03-2021 |
| | | | TW | 202204967 A | 01-02-2022 |
| | | | US | 2021063702 A1 | 04-03-2021 |
| CN 113552695 | A | 26-10-2021 | NONE | | |

EPO FORM P0459

For more details about this annex : see Official Journal of the European Patent Office, No. 12/82